# EUROPEAN PATENT SPECIFICATION

(11) **EP 3 557 480 B1**
(45) Date of publication and mention of the grant of the patent: **07.06.2023**
(21) Application number: 19170713.2
(22) Date of filing: 23.04.2019
(51) Int. Cl.: G06V 10/22, G06V 10/764, G06V 30/242, G06V 30/413, G06V 30/414, G06Q 10/10, G06F 40/295, G06Q 30/04

(54) **DERIVING DATA FROM DOCUMENTS AND FROM TRANSMISSION PROTOCOLS USING MACHINE-LEARNING TECHNIQUES**
ABLEITUNG VON DATEN AUS DOKUMENTEN UND VON ÜBERTRAGUNGSPROTOKOLLEN UNTER VERWENDUNG VON MASCHINENLERNTECHNIKEN
DÉRIVATION DE DONNÉES À PARTIR DE DOCUMENTS ET DE PROTOCOLES DE TRANSMISSION À L'AIDE DE TECHNIQUES D'APPRENTISSAGE PAR MACHINE

(30) Priority: 20.04.2018 EP 18168570
(43) Date of publication of application: 23.10.2019
(73) Proprietor: Finmatics GmbH, 1150 Wien (AT)
(72) Inventor: Sagmeister, Patrick, 1150 Wien (AT)
(74) Representative: Zahn, Matthias

(56) References cited:
- US-A1- 2006 095 372
- Michelle Killian: "IS THAT SENDER FOR REAL? THREE WAYS TO VERIFY THE IDENTITY OF AN EMAIL", , 11 May 2016 (2016-05-11), XP055619574, Retrieved from the Internet: URL:https://frsecure.com/blog/is-that-send er-for-real-three-ways-to-verify-the-ident ity-of-an-email/ [retrieved on 2019-09-06]
- Dylan Press: "Fake Email Invoices: Why Office 365 Keeps Missing These Phishing Attacks?", , 31 July 2018 (2018-07-31), XP055619567, Retrieved from the Internet: URL:https://www.avanan.com/resources/invoi ce-office-365-phishing [retrieved on 2019-09-06]

## Description

### Technical Field

The disclosure generally relates to computer-implemented methods, computer systems, computers and computer programs for deriving data from documents and/or from the transmission of the documents from senders to recipients, and more particularly relates to approaches that use machine-learning techniques.

### Background

Documents convey information in at least the direction from a sender of the document to a recipient of the document. Documents can be differentiated according to the function of the information (e.g., invoices, bank statements, birth/marriage/death certificates, notifications, etc.), according to the medium (e.g., paper documents or electronic documents), according to the person or entity who creates the document (e.g., banks, vendors, civil registration offices, intellectual property offices), or otherwise.

The documents can be considered to have a carrier with one or more planes and to have visual elements that are located on the plane (or that are associated with the plane). The carrier keeps (or associates) the visual elements on particular locations on the plane. Examples for visual elements are: logos, trademarks, photos, drawings; symbols; lines of text, arrangements of text and digits in tables (with or without frames); signatures (individually by hand, or printed as image); prints made by stamps (e.g., date stamp) or seals, usually located on the document at random positions; areas that remain empty; patterns, such as horizontal lines or squares; and background colors.

As the name suggests, visual elements are visible to the human eye. The elements convey information by the arrangement of dots or pixels. In contrast, a printer produces tiny dots on paper (e.g., 600 dots per inch), and a screen activates pixels (e.g., 96 pixels per inch), but such individual dots or pixels are not considered as visible elements.

To differentiate the documents according to the medium, two media are of interest here.
- Paper-documents have the carrier substantially made from paper and have the visual elements as text or graphics printed on the paper.
- PDF-documents are data-structures (Portable Document Format, ISO 32000-1:2008) that do not have a physical carrier but instead have data elements both for the visual elements and for the location of the visual elements. PDF-documents can be printed (i.e. converted to paper documents) and can be displayed on a computer display.

In principle, the sender can choose any medium for the document that the recipient can read.

Usually, the documents have functions. In the simplified notation (sender, function, recipient) there are many examples, such as (vendor, invoice, buyer); (government agency, communication, citizen); (patent office, communication, patent applicant); (patent applicant, request, patent office); or (publishing house, novel, reader).

The functions can relate to a role of the sender and of the recipient, and the functions can trigger actions for the recipient.

Document images (or "matrix documents") are intermediate forms.
Document images are data-structures with pixels. Exemplary storage formats are JPEG (Joint Photographic Experts Group), BMP (bitmap image file), GIF (Graphics Interchange Format), PNG (Portable Network Graphics), TIFF (Tagged Image File Format) and others. Document images can be obtained by scanning or photographing paper documents, or by converting PDF-documents.

Document images are considered to be static documents: the pixels do not change. A document image being converted to a different storage format is considered as a new document.

The visual elements convey the information, but the visual elements are distributed across different locations (i.e., on the plane), occasionally are also distributed across the pages. There are varieties (or variabilities) of element-to-location relations and (optionally) of element-to-action relations.

Frequently, the varieties are related to the sender of the documents. Document types with low variety seem to be in minority, but document types with high variety seem to be majority. The following explains this.

One on hand, literary texts - such as novels - have element-to-location relations (texts on horizontal lines) with zero or negligible variety, because most novelists take that approach. Texts in patent applications have element-to-location relations that consider headlines, paragraph numbers, and line numbers, with a variety slightly above zero, and limited by conventions or standards (e.g. set by legislators).

On the other hand, many other documents - such as invoices to take only one example - have multiple different elements located anywhere on the document. A relatively high variety results from the lack of standards and from the desire of each sender (i.e., vendor) to be different. Further, the function (such as triggering actions) of the visual elements can be different. To stay with the invoice example, logos identify the vendor (but logos are placed somewhere); bank account numbers allow transactions (but with arbitrary locations); products and services can be listed in tables, and so on.

Traditionally, the sender forwards (or "transmits") the documents (paper, PDF; or image) to a recipient that is a human user. The human recipient visually inspects the document but deals with the variety of element-to-location relations intuitively, classifies the document mentally, and understands the function and decides on actions.

The human reader uses all available care to read the information as accurate as possible, otherwise the action fails (e.g., monetary transaction to incorrect account).

Computers can derive information from the document as data (i.e. "derive data"). Computers usually start from the image of a document by well-known techniques such as optical character recognition (OCR). However, such techniques are weak in knowing the element-to-location relations, let alone the element-to-action relations.

The computer needs rules for the relations. In other words, if the location of different visual elements is known as a rule, the computer can derive the data in a structure that is suitable to trigger the actions.

However, there are constraints. Much simplified, high document variety (i.e., of element-to-location relations and/or element-to-action relations) means high rule complexity, and also high accuracy requirements for deriving data. From a different point of view: document variety can contradict accuracy unless the rules have been established by taking the variety into account.

A reader can misunderstand some words in a novel without consequences. But a buyer must not confuse monetary amounts on an invoice; and a patent applicant must not mix-up time-limits in a communication from the office. In other words, standardization is available for documents with simple element arrangements, but not available for documents with more complex arrangements.

The rules can be obtained manually, or can be obtained by machine-learning techniques. Simplified, a training computer analyzes a plurality of image documents, applies OCR and interacts with an expert user ("supervisor"). Supervised learning techniques are known, but training requires computation time and a relatively high number of documents (in a training set). Further, minor changes in the appearance of the documents would require retraining.

Machine-learning techniques are explained in the literature, among them by Stuart Russell, Peter Norvig: "Artificial Intelligence: A Modern Approach" and by Mehryar Mohri, Afshin Rostamizadeh, Ameet Talwalkar: "Foundations of Machine Learning".

A further reference is Rusiñol, Marcal et al: "Field Extraction from Administrative Documents by Incremental Structural Templates", 2013, 12th International Conference on Document Analysis and Recognition, IEEE, 25. August 2013, pages 1100-1104.

There is a need to optimize machine-learning to deal with complexity of document types and with the complexity to train computers for such types, and also to address further topics.

As mentioned, the functions can trigger actions for the recipient. In view of this, there are further constraints. Fake documents may trigger the recipient to act inappropriately, for example to pay to an incorrect account. Using computer-implemented approaches to derive data may not prevent such inappropriate actions. This leads to the task for the recipient to authenticate the sender. This task is usually performed prior to deriving data.

US 2017/132866 A1 describes self-learning for document classification, authentication and information extraction for the example of driving license documents. US 2006/095372 A1 describes a computer system that is specialized to processing invoice documents. Looking at the content of documents, the system allows the identification of potential non-authorized documents and provides user interaction.

### Summary

According to embodiments of the present invention, methods and computers systems are provided for deriving document data from the documents, transmission data from protocols, relating to the transmission of the documents from the sender to the recipient.

Document data allows the recipient to identify actions, and transmission data allows the recipient to be more precise in the actions. In that sense, transmission data is auxiliary data that is used optionally.

Deriving data (document data and transmission data) can be distinguished into consecutive phases, such as a training phase performed by a training computer (resulting in document data and transmission data, both comprising rule sets) and a production phase to be performed by a production computer (by the same computer, or by a further computer that uses the rule sets). The distinction into training and production computers is convenient for explanation, to differentiate phases and/or roles. However training and production functions can be implemented by physically one computer.

As used herein, the term "production" stands for a phase in that document data (and optionally transmission data) is being obtained in order to perform the action in relation to the document (production data, production computer, and production function).

The invention is defined in the independent claims 1, 8 and 9. Preferred embodiments are defined in the dependent claims.

According to the invention, a computer processes data that becomes available by transmitting (or transporting) the document from the sender to the recipient. Thereby, the computer uses protocol data to obtain transmission data.

The computer classifies the transmission data. The recipient can use transmission classes for at least one of the following purposes: (A) to identify attributes of the document (i.e., enhancing document data), and/or (B) to authenticate the sender.

Since the documents are usually transmitted in containers (such as paper envelopes or emails) that prevent reading the document during transmission, transmission data usually does not convey actions for the recipient. A particular document is related to a particular container. (There is no contradiction to carry multiple documents in a single container). Therefore, the transmission data is related to the document data.

For obtaining transmission data, the training steps can be applied likewise. Instead of processing visual elements (of the documents), the computer can obtain the transmission data by processing transmission elements. Some of the transmission elements can be visual elements as well.

For purpose (A), transmission classes are related to document classes, e.g. to increase a probability value that the document data is derived from the document correctly. For purpose (B), comparing document classes and transmission classes can be used to authenticate the sender and can support the detection of frauds. In other words, for both purposes, transmission data (such as transmission classes) can be used for plausibility checks.

In other words, a computer is associated with a recipient of a document. According to a computer-implemented method, the computer identifies attributes of the document. The computer receives the document from a sender and processes the document according to visual elements by applying rules, provides document data and derives a document class. The computer receives protocol data that is associated with the transmission of the document from the sender to the recipient. The computer receives the protocol data from a channel that has transmitted the document. The computer processes the protocol data according to transmission elements by applying protocol rules to obtain transmission data, and derives a transmission class. The computer compares the document class and the transmission class and provides a document attribute.

A computer program product - when loaded into a memory of a computer and being executed by at least one processor of the computer - performs the steps of the computer-implemented method. A computer for generating rules to be applied for computer-implemented deriving data from documents is adapted to perform the computer-implemented method.

### Brief Description of the Drawings

FIG. 1 illustrates an overview to a sender, a channel and a recipient;
FIG. 2 illustrates an overview to a computer system that processes documents to data, during different phases;
FIG. 3 illustrates the overview with an arrangement by that the functions of a training computer and of production computer are implemented by the same physical computer;
FIG. 4 illustrates a document with visual elements and with coordinates;
FIG. 5 illustrates documents with first visual elements and with second visual elements;
FIG. 6 illustrates a flow-chart diagram for a method to generate rule sets by operating a training computer;
FIG. 7 illustrates a flow-chart diagram for a method to derive documents data from documents, by operating a production computer that applies the rule sets;
FIG. 8 illustrates reference data, being data that is available in one or more databases of a reference computer;
FIG. 9 illustrates training documents and reference data in combination with first and second rule sets as input and output of the training computer;
FIG. 10 illustrates an overview to the transmission of a document from a sender to a recipient via a channel;
FIG. 11 illustrates an overview to the computers in use by sender and recipient during the different phases;
FIG. 12 illustrates a flow-chart diagram for a computer-implemented method to identify document attributes;
FIG. 13 illustrates the channel with nodes and illustrates protocol data by way of example; and
FIG. 14 illustrates an example of a generic computer device and a generic mobile computer device, which may be used with the techniques described here.

### Detailed Description

### Time and Space

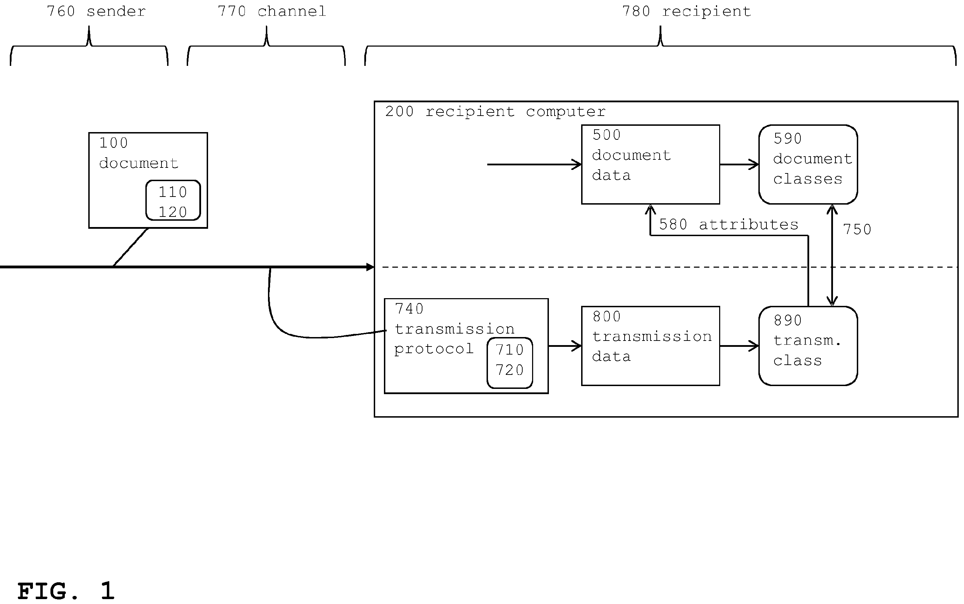

FIG. 1 illustrates an overview to sender 760, channel 770 and recipient 780. At recipient 780, computer system 200 (or computer 200, or simply computer 200 in the following) processes document 100 (input) to document data 500. Sender 760 and channel 770 can use computers as well, but for simplicity there are left out from illustration. Usually, sender 760 and recipient 780 are different entities at different geographic locations.

From a high-level point of view, the description differentiates time and space. Sender 760 creates document 100 during the creation time interval. Channel 770 transmits (or "transports") document 100 from sender 760 to recipient 780 during a transmission time interval. Computer 200 processes document 100 during the processing time interval by computer 200. Auxiliary activities such as reading a physical document (i.e. a paper document) into computer 200 occur at the beginning of the processing time interval.

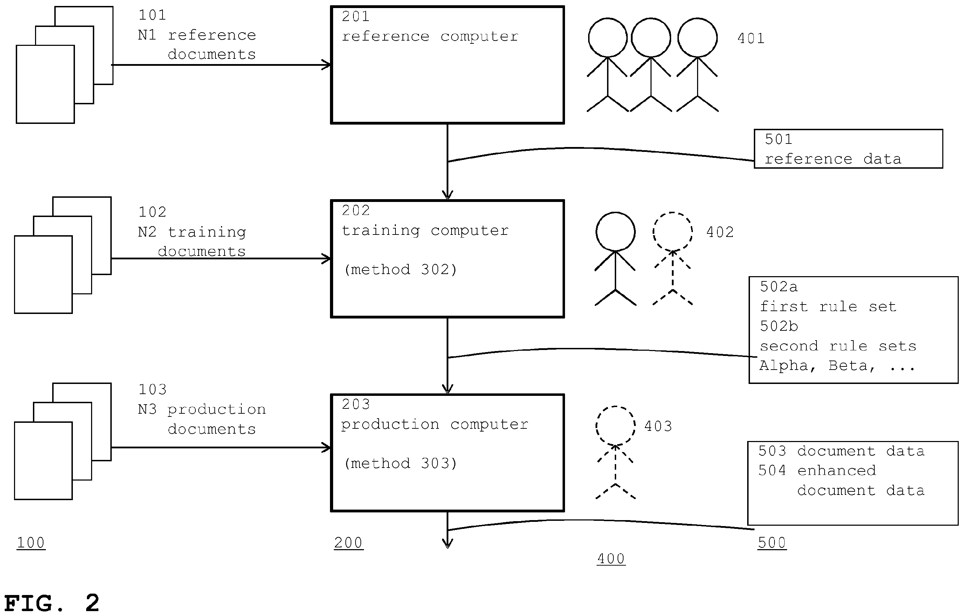

Document 100 conveys information by visual elements 110/120 on the (two-dimensional) space of the carrier. Computer 200 uses visual elements 110/120 to obtain document data 500, as explained in connection with FIGS. 2-9.

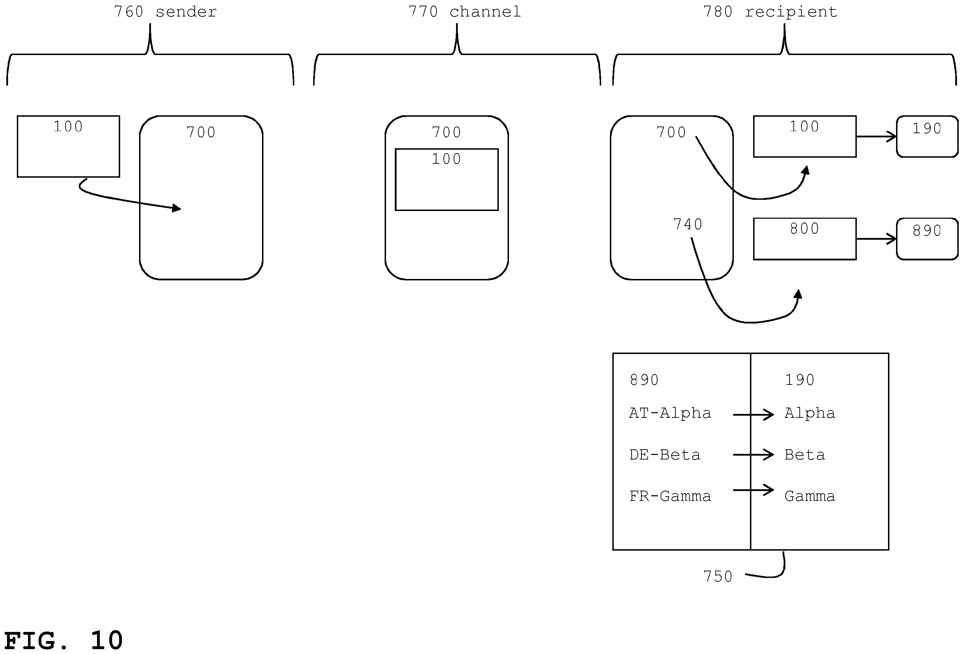

Optionally, information collected during the transmission (via channel 770) is made available to computer 200 as protocol data 740. Protocol data 740 comprises transmission elements 710/720 (or "transmission characteristics"). Optionally, computer 200 can derive transmission data 800, also during the processing time interval. Details are explained in connection with FIGS. 10-13.

The description focuses on explaining computer-implemented activities performed by computer 200. The dashed line illustrated within computer 200 can be regarded as a chapter division for this description. The description starts "above this line" by explaining how computer 200 obtains document data 500 (by processing documents in respect to visual elements), how it obtains document classes 590 and how machines learning (ML) can support that. Document data 500 can comprise rules resulting from ML and to be used by ML.

The description then goes "below the line" and explains how computer 200 can use protocol data 740, to derive transmission data 800 and transmission classes 890.

The description will then cross the line to explain how computer 200 can provide further attributes 580, illustrated by a bi-directional arrow 750 between classes 590 and 890, and by a single-directional arrow from class 890 to document data 500. Attributes 580 serve purpose (A) (i.e., enhancing document data 500 by probability values) and purpose (B) (i.e., authentication). The teachings regarding machine learning are applicable as well.

Dictated by requirements for machine learning, the processing time interval is also differentiated for several phases (reference, training, production). As processing is repeated (with variations) for these phases, document data from one phase can be used as a parameter for the next phase, and transmission data from one phase can be used as a parameter for the next phase.

For ML, there are correspondences and/analogies (i.e., above and below the dashed line): documents 100 to protocol data 740 (or transmission protocol), visual elements 110/120 to transmission elements 710/720, document data 500 to transmission data 800, and document classes 590 to transmission classes 890.

In the figures, reference numbers follow the convention: 1xx for documents, 2xx for computers, 3xx for methods and steps, 4xx for users, 5xx for data (mostly document data), as well as 6xx, 7xx and 8xx for transmission related topics. Looking at phases, reference numbers follow the convention: xx1 for the reference phase, xx2 for the training phase, and xx3 for the production phase. xx0 indicates applicability to all phases.

Within pluralities of documents, particular members or instances can be differentiated by xxx-1, xxx-2 etc. notation. Due to the phase differentiation, some activities in the training phase are relevant for activities in the production phase. This is mainly applicable for generating rules (rules link the phases). Formulations similar to "enable a (production) computer to identify, to provide, to differentiate, to de-code, to check etc." are to be understood in the meaning of "computer-implemented identifying, providing, differentiating, de-coding checking etc."

Although obtaining document data and obtaining transmission data are explained in different parts of this description (document data first, transmission data second, cf. the dashed line), implementations can use parallel and/or by serial processing. In other words, documents 100 and protocols 740 can be processed at the same time, or can be processed at different times.

As used herein, the attribute "production" stands for the phase during which documents are being processed with the goal to actually trigger the actions. This is in contrast to "training", wherein the "production" uses the results of training.

### Overview

FIG. 2 illustrates an overview to computer system 200 (or computer 200) that processes documents 100 to document data 500. As mentioned, document data can comprise rules.

Computer system 200 operates in consecutive phases, illustrated in top-down-direction. Depending on the phase, computer 200 is called differently.
- During a reference phase, reference computer 201 receives reference documents 101 (or basis documents) and provides reference data 501.
- During a training phase, training computer 202 receives training documents 102 (i.e. a training set) generates rule sets (first rule set 502a and second rule sets 502b (plurality, i.e., in variants). Training computer 202 also receives reference data 501 that is used for the second rule sets 502b. There are rule variants based on different visual classes, and - optionally - based on different sender classes. The rule sets (first and second) are also called "rule models". Training computer 202 performs training with the mentioned first and second training steps, and optionally with the third step. While the first training step is un-supervised, the second training step has a first sub-step (un-supervised) and a second sub-step (supervised).
- During a production phase, production computer 203 receives production documents 103 and receives rules sets 502a and 502b and derives document data 203. Production computer 203 applies rule set 502a and thereby determines which variant of the rule sets 502b has to be applied next. This approach addresses the complexity.
- Optionally, production computer 203 also provides enhanced document data 504.

The separation into such phases is convenient for illustration, but phases can be repeated. For example, additional reference data 501 can be received at any time.

In relation to training computer 202, computer 201 can be regarded as a "pre-training computer", and production computer 203 can be considered as a "further computer". But as mentioned above, the description distinguishes phases and roles for didactical reasons. Computer 200 can be split into different physical computers, according to the phases. This is convenient, but not required. However, training computer 202 and production computer 203 are conveniently implemented as physically being the same computer.

Computer system 200 can have user interfaces (UI) to human users 400, implemented, for example, by well-known UI elements to receive information, to display information and so on. The UI elements can be implemented by additional computers that are separate from computers 201, 202, 203. For the example, the UI elements can be implemented by web-browsers on additional computers that interact with (some of) the mentioned computers (201, 202, 203 of system 200) via well-known techniques, such as Internet techniques. In case that such a separation is used, it is possible to differentiate user front-end computers (i.e. the additional computers interacting with users) and back-end computers (i.e. computers 201, 202, 203). The differentiation can also be considered be client and server computers.

Looking at the phases, the involvement of human users 401, 402 and 403 for computers 201, 202, 203, respectively, decreases. Users 401 manually (or semi-manually) transfer information from the reference documents 101 to reference computer 201. Users 402 are expert users that are involved in supervised learning while training computer 202 is in operation. Users 402 are also shown by plain lines, symbolizing that training is sometimes supervised (e.g., second sub-step of second training step), and by dashed lines, symbolizing that training is sometimes un-supervised (first training step, and first sub-step of second training steps). Users 403 - with dashed lines as well - are illustrated for the sake of completeness: they do not play an active role. In some sense, users 403 are users that benefit from production computer 203 that derives information from the production documents 103 as data, compared to the earlier-mentioned approaches with higher accuracy.

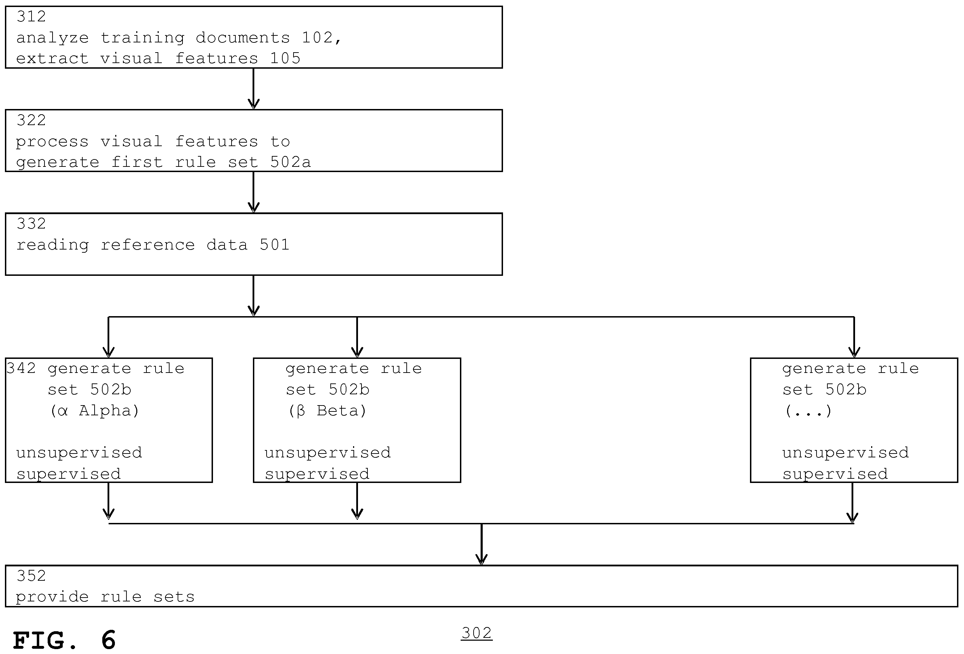

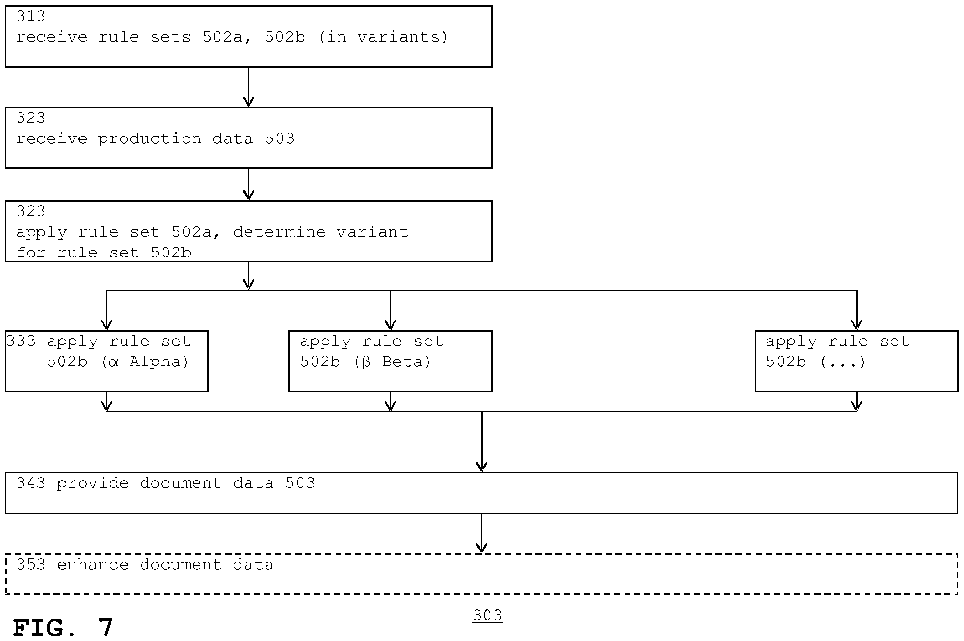

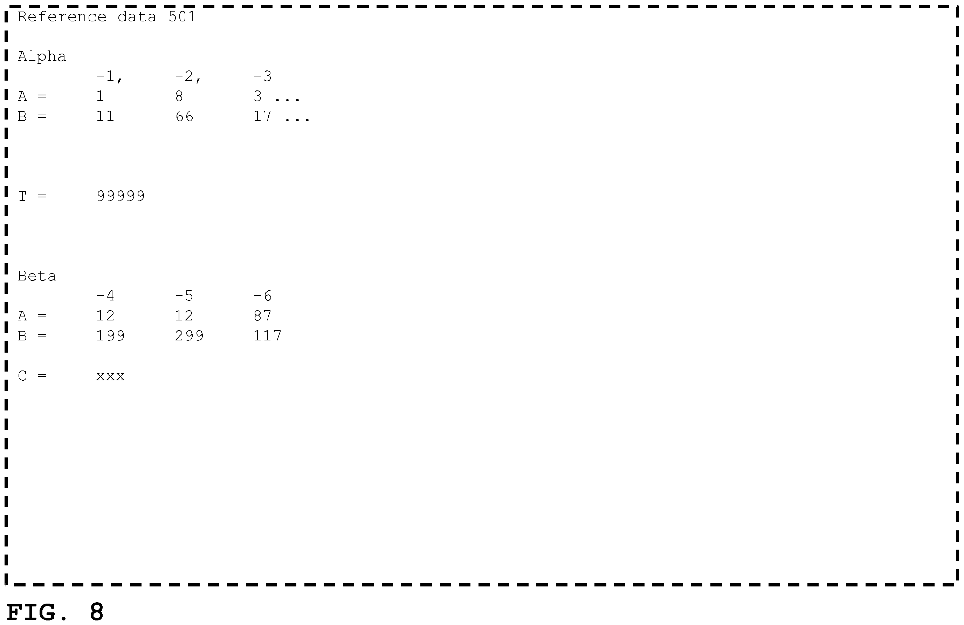

Training computer 202 performs method 302. The mentioned training steps are explained in connection with FIG. 6 (flow-chart) and FIGS. 8-9 (training steps). Production computer 203 performs method 303 with details in FIG. 7.

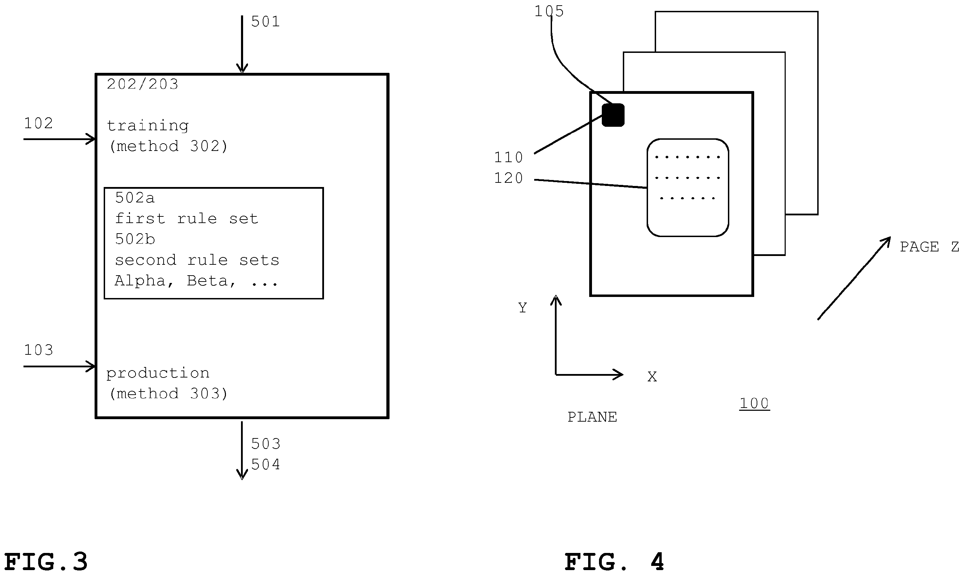

The following discussion will focus on training computer 202, with the supervised and non-supervised machine-learning applied to the input from training documents 102 and to reference data 201. As it will be explained (starting from FIG. 4), there are visual elements on the documents to be processed differently.

The documents 100 are available in first, second and third pluralities: N1 reference documents 101; N2 training documents 102; and N3 production documents 103

The actual numbers (i.e. quantities) of documents are not relevant for the discussion. Compared to prior art approaches (that do not differentiate) the number N2 (of training documents) is less than in prior art approaches, with similar recognition accuracy.

For convenience of illustration, the detailed description occasionally refers to two functional scenarios that serve as examples:
- In a first scenario (vendor, invoice, buyer), the documents are invoices that the vendor communicates to the buyer.
- In a second scenario (patent office, communication, patent applicant), the documents are communications from a patent office to a patent applicant.

In the first scenario, users 401 can be accountants who work for the buyers. Users 401 read the invoices and manually input invoice information into reference computer 201. One accountant can work for multiple buyers. It is noted that multiple vendors send invoices to the same buyer so that a variety of documents is assumed to have been considered. In the second scenario, users 401 can be persons who work in so-called docketing.

User 402 performs interactions with training computer 202 for (sub) steps that involve supervised training.

### Computer implementations

FIG. 3 illustrates the overview of FIG. 2, with an arrangement by that the functions of training computer 202 and of production computer 203 are implemented by the same physical computer. Hence, both functions are combined to computer 202/203. Input and output data is mentioned by references 102, 103, 501, 503, 504 as in FIG. 2. Rule sets 502a and 502b would be handed over between the functions by known techniques.

### Visual elements on documents

FIG. 4 illustrates document 100 with visual elements 110, 120 and with coordinates XYZ. For explaining document 100, the different phases do not matter. In other words, document 100 collectively stands for any of documents 101, 102 and 103 (cf. FIGS. 2-3).

Visual elements 110, 120 are symbolized here by a fictitious logo (the black square) and by a table with alpha-numeric characters that convey information. The location of visual elements 110, 120 on the carrier (e.g. paper, PDF, or image) can be described by location coordinates, basically of two types:
- Plane coordinates indicate the location of particular visual elements on a single carrier. In practical applications, paper documents may be bended (e.g., printout at a supermarket cashier; paperback book), but for the plane coordinates, the documents are considered to be flat. The plane coordinates can be given as XY-coordinates, and can be associated with measurement units (e.g., milli meter). Measurement units that are related to text can also be used (e.g. column number, line number, character number, character size, etc.)
- Page coordinates are optional coordinates that indicate particular page-numbers if the carrier that has multiple pages (multi-page documents). Page coordinates can be given by Z. As used herein, a single-sheet of paper can have two pages (Z=1 for the front side, Z=2 for the back side).

It does not matter if document 100 is a paper document, a PDF-document, or an image document. A paper-to-image conversion or a PDF-to-image conversion keeps the appearance and the location of the visual elements unchanged. Conversion effects (e.g., color to monochrome, scanning and digitalization effects) can be relevant. For example, visual elements that are defined by color would become un-visible, but the description neglects such effects for simplicity. Despite conversion, the element-to-location relations and the optional element-to-action relations remain unchanged.

In case that document 100 is a paper document, visual elements 110, 120 are printed on that paper. The point in time when the visual elements are printed does not matter (creation time interval). Logos can be printed in advance to a bunch of papers, and the further information is added at a later point in time. In case that document 100 is a PDF-document, visual elements are embedded as data-structure into a PDF-file.

Visual elements 110, 120 have one or more visual features that allow the identification of such elements. By way of example, FIG. 4 illustrates visual feature 105 (a "round corner") for visual element 110. Computer techniques to recognize and/or extract such and other features, to locate them by coordinates etc. are known in the art. For simplicity of explanation, the description notes visual features by words, but the computer would use data-structures (such as vectors) that are not necessarily addressed to humans. Further exemplary visual features will be mentioned in connection with the other drawings.

For the following, is it assumed that once a document has been read into a computer for processing (i.e., as document 101 to computer 201, 102 to 202, 103 to 203), the document remains unchanged.

FIG. 4 illustrates documents 100 with first visual elements 110 and with second visual elements 120. The figure thereby introduces further writing conventions by describing the structure of the documents. It is therefore not relevant whether documents 100 are reference documents, training documents or production documents (cf. FIGS. 2-3). For simplicity, FIG. 4 illustrates documents 100 as single-page documents in the XY-plane, disregarding Z. But those of skill in the art can apply the teachings to multi-page documents as well. Documents 100 are illustrated in particular exemplary instances, noted from 100-1 to 100-6, the notation being applied to the visual elements accordingly.

Documents 100 have first visual elements 110 and second visual elements 120. Examples for first visual elements 110 are logos (cf. the squares or circles), examples for second visual elements 120 are indications with text, figures etc. (cf. A, B, C ... T).

The visual appearance and the location of the visual elements can be used to classify the documents. In principle, classifying is possible by using both the first and the second visual elements. The resulting class is referred to as "visual class". The description explains the classification according the first visual elements, this is convenient for explanation but not limiting, the person of skill in the art can use both elements.

As in the example, documents 100-1, 100-2, and 100-3 (i.e. instances) have first visual elements 110-1, 110-2 and 110-3 (the squares) with common visual features. This does not mean that the elements are identical in appearance and location. In the example, the visual features are as follows:
(+) There are squares that that are filled with ink (or pixels) of the same color (e.g., black color).
(+) The squares have rounded corners (cf. reference 105 in FIG. 4).
(+) The squares are located in zone 130 with particular coordinates, with a threshold-exceeding probability that the squares are located within zone 130.
(-) There can be alignments with other visual elements. In the particular example, not all squares are exactly at the same location (cf. the different offsets to the edge of the document, in 100-1, 100-2 and 100-3), and there is no alignment in document 100-3 (between elements 110-3 and 120-3).

For illustration, the visual features are explained here in words, but machine-learning techniques are available to catch or extract the features otherwise, for example, as feature vectors, feature descriptors. The (+) and (-) tags indicate that features are common to the documents, or not common. It is noted that the number of visual features (to be considered and to be determined by production computer 203) is minimized. (The minimization can speed up the operation of production computer 203.)

Since the visual elements 110-1, 110-2, 110-3 share common features, for at least a predefined number of features (here: 3 features (+) of 4 features, the documents 100-1, 100-2 and 100-3 belong to the same visual class, here indicated by Greek letter α. It is noted that visual class α does not (yet) point to a particular sender.

As in the example, documents 100-4, 100-5, and 100-6 have first visual elements 110-4, 110-5, 110-6 (the circles) with common visual features as well. In the example, the visual features are as follows:
(+) There are circles, inside white.
(+) The circles have a diameter that corresponds to one quarter of the Y-dimension of the page (tolerances possible).
(+) The circles are located in an area at the right side below, zone 140.

Likewise, documents 100-4, 100-5, and 100-6 belong to the same visual class, here class β. Again, a particular sender is not yet identified.

The visual classes can correspond to an originator of the document (i.e., sender of the document, as sender class). This is explained by the scenarios:
- According to the first scenario, visual class α corresponds to a (fictitious) vendor Alpha, and visual class β corresponds to a (fictitious) vendor Beta, (as illustrated in FIG. 6).
- According to the second scenario, class γ corresponds to a (fictitious) patent office Gamma, and class Δ corresponds to a (fictitious) patent office Delta.

It is noted that visual classes can also be differentiated according to the recipient. In this case, the recipient is indicated on the document, for example, in an address field (being a visual element). As the person of skill in the art can use the teaching from the sender classes, this case is not further explained.

Sub-classes could be defined as well, taking sub-feature, such as class α1 (vendor Alpha with the squares in "Silber", Alpha 1), class α2 (Alpha with the squares in "Gold", Alpha 2) and so on.

The classification for the visual class can be performed manually (e.g. users 402 in FIG. 2), but also by training computer 202 (cf. FIG. 2) without user-interaction (i.e. by un-supervised learning). In other words, the classifier (the entity that performs the classification) can be a human and/or a computer (computer 202).

There is a mapping (i.e. a relation) between the visual classes (such as α, β, γ, Δ ...) and the sender classes Alpha, Beta, Gamma, Delta etc. The description now explains how such mapping is identified to generate the first rule. Second visual elements 120 can comprise data with at least one unique feature. That unique feature can be known to the classifier. In case that training computer 202 performs the classification (during training), reference data 501 provides assistance by providing the unique feature that points to the sender (of the document).

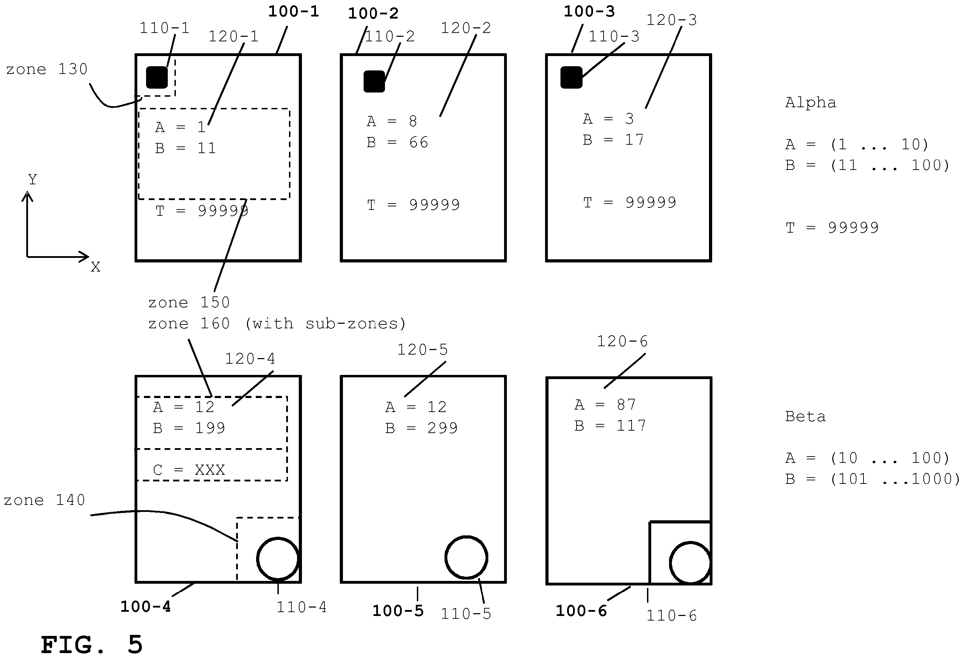

This mapping is explained for documents in visual class α. As in FIG. 5, second visual elements 120-1, 120-2, 120-3 comprise a unique identifier (e.g., text "T=99999") that is related to sender Alpha. In other words, the identifier is printed on documents from Alpha only.

Examples for unique identifiers (that have correspondence in reference data 501 comprise: trade register numbers (that are particularly assigned to particular vendors), street addresses (in combination with sender names), names of persons that appear on the documents (e.g., in signatures).

A combination principle can be used: the combination of identifiers can be unique.

As already mentioned, further visual features can be considered, such as visual features for second visual elements 120 (e.g., alignment of text lines). As explained, by analyzing training documents 102, training computer 202 extracts visual features, some of these features are processed for second visual elements 120. Analyzing can be performed in multiple passes.

The second visual elements 120 (readably with OCR-techniques) can have content sub-elements 120A, 120B, 120C in data ranges that are common for documents of the same sender class. The term "data range" is simplified for patterns that are typical for the documents of a sender class.

In the first scenario, vendors Alpha and Beta use particular ranges for identifying products and monetary amounts (from a minimal product price to a maximal product prices).

In the second scenario, the offices use particular amounts for fees (e.g., 450 Euro for a so-called renewal fee, but not 449 Euro, uses particular references to legislation (e.g., provision 71(3), but not provision 72(4) etc.).

Such information would be available in reference data 501 so that the rule 502a can be trained. In other words, the rule allows taking over a classification by visual classes (i.e., α, β, γ, Δ ...) into a classification by sender (Alpha, Beta, Gamma, Delta ...).

### Method to operate training computer

FIG. 6 illustrates a flow-chart diagram for method 302 to generate rule sets 502a and 502b by operating training computer 202.

Method 302 is a computer-implemented method that is implemented by training computer 202 for generating rules 502a, 502b to be applied for computer-implemented for deriving data from documents (document data, here by "production computer 203" in FIG. 2, and/or by computer 202/203, or by other computer arrangements). Training computer 202 derives the rules from training documents 102. As explained, the documents having first and second visual elements. The rules are generated by training.

In analyzing 312, training computer 202 analyses (i.e., parses) documents 102 to extract visual features 105 (cf. FIG. 4) of training documents 102. In processing 322, training computer 202 processes the extracted visual features to generate first rule set 502a. As explained (cf. FIG. 2), first rule set 502a enables a computer (e.g., further computer 203) to identify first visual elements 110 according to the visual features. The computer (e.g., computer 203) is thereby enabled to differentiate documents from different visual classes (α, β etc.). In receiving 332, training computer 202 receives reference data 501 that is based on a plurality of reference documents 101. In processing 342, training computer 202 processes the extracted visual features in combination with reference data 501 to generate second rule sets 502b. The second rule sets enable computer-implemented de-coding information that is conveyed by second visual elements 120 into data (cf. A, B, C). The second rule sets 502b are being generated in variants that are specific for the different visual classes (e.g., α, β) of the documents.

It is noted that processing in step 342 - processing - can be performed in parallel, for the variants. Person of skill in the art can take advantage of parallel processing.

Optionally, processing 322 the extracted visual features to generate the second rule sets 502b can comprise that training computer 202: obtains alpha-numeric data (e.g., A, B, C) from second visual elements 120, and relates the alpha-numeric data (e.g., A, B, C) to reference data 501. As a consequence, the second rule sets comprises rules that enable computer-implemented checking of data ranges.

Optionally, processing 322 the extracted visual features to generate first rule set 502a can comprise to minimize the number of extracted visual features for the first rule set 502a.

Optionally, processing 322 the extracted visual features to generate first rule set 502a can comprise to generate first rule set 502a with rules that enable computer-implemented differentiating the senders of the documents into sender classes (e.g., Alpha, Beta). In this case, processing 342 visual features to generate second rule sets 502b is performed for variants that are specific for the sender classes (e.g., Alpha, Beta).

Optionally, processing 322 the extracted visual features to generate a first rule set (502a) comprise to map the visual classes (e.g., α, β) to sender classes (e.g., Alpha, Beta) by using unique identifiers.

Optionally, processing 322 the extracted visual features to generate the first rule set (502a), and processing (342) to generate the second rule sets (502b) uses techniques selected from the following: Linear Discriminant Analysis, Classification and Regression Trees, General Linear Models, Boosted Logistic Regression, Decision Trees, Naive Bayes, Neural Networks, Random Forest, Flexible Discriminant Analysis (also called Bagging), and Support Vector Machines.

Optionally, in analyzing 312 training documents to extract visual features 105, the training computer extracts visual features such as any of the following (given here as a non-exclusive list): visual features that relate first visual elements and second visual element to zones (cf. 130, 140, 150, 160 in FIG. 5) of the XY-plane of the document; visual features that place the first visual element 110 and/or the second visual elements 120 into frames (cf. FIG. 4 for a frame at element 120); and visual features for particular colors and particular patterns.

As illustrated below in FIG. 6, there can be a further step of providing 352 first rule set 502a and second rule sets 502b (e.g., to further computer 203). This step is an optional step, in case that both training computer 202 and production computer 203 are implemented by different physical computers. Providing can be implemented by sharing access to a data carrier for the rules.

### Method to derive document data

FIG. 7 illustrates a flow-chart diagram for method 303 to derive document data 503 (optionally enhanced document data 504) from production documents 103, by operating production computer 203 (i.e. the "further computer") that applies rule sets 502a, 502b.

Method 303 is computer-implemented as well. In receiving 313, computer 203 receives first rule set 502a and receives second rule sets 502b in variants. The rule sets have previously been provided by method 302. Receiving is complementary to step 352 in FIG. 4. In receiving 323, computer 203 also receives production documents 103. For each particular production document and separately, in applying 333, computer 203 applies first rule set 502a to identify the particular visual class (e.g., α, β) of particular production document 103, and depending on the visual class (e.g., α, β) of particular production document 103, applying 343 the second rules rule set 502b in the variant of the identified visual class (e.g., α, β) to de-code the information that is conveyed by the second visual elements 120. In providing 353, computer 203 provides de-coded information as document data 503.

The figure illustrates the variant-specific application (of rule sets 502b) parallel boxes. The potential advantage of parallel processing is noted for this phase as well.

Optionally, applying 333 first rule set 502a can comprises to differentiate the senders of the production documents into sender classes (e.g., Alpha, Beta), and applying 343 second rule set 502b can be performed for the variant that is specific for the sender classes (e.g., Alpha, Beta).

FIGS. 4-5 also illustrate a computer program or a computer program product. The computer program product - when loaded into a memory of a computer and being executed by at least one processor of the computer - performs the steps of the computer-implemented method. In other words, the blocks in FIGS. 4-5 illustrate that methods can be implemented by a computer (such as computer 202, 203) under the control of the programs.

### Reference data for training

FIG. 8 illustrates reference data 501, being data in one or more databases of reference computer 201, data that is available prior to the training phase. FIG. 8 uses the documents from FIG. 5 with the assumption that documents 100-1 to 100-6 are reference documents 101-1 to 101-6. The illustration gives examples for the first scenario (invoices). As mentioned, reference data 501 can be considered "historical data", in the sense that it is (phase 1, pre-training).
Creating reference data 201 can be summarized as a sequence of steps with:
- receiving a first plurality N1 of documents 101;
- inspecting the first plurality N1 of documents 101, thereby identifying a sender class (alpha, beta, gamma, delta etc.) according to the first elements 110, according to unique identifiers (cf. T = 99999 in FIG. 5), or otherwise, and de-coding the information of the second elements 120 (e.g., user 401 reading from the document)
   and
- operating the reference computer 201 to store the information as reference data 501 - separated by sub-elements, thereby distinguishing the reference data according to the identified sender classes (Alpha, Beta).

The first plurality (N1) comprises at least one document 101 per visual class (in implementations also per sender class). In the first scenario, there is a first class for invoices from vendor Alpha, and a second class for invoices from vendor Beta. In this first scenario (vendors, invoice, buyer) reference module 201 uses an accounting database that tracks invoices and payment activities. The first plurality N1 of documents would comprise invoice documents from vendor Alpha and from vendor Beta.

As a result, reference data 201 is data with information (sub-element A from Alpha, sub-element A from Beta, sub-element B from Alpha, sub-element B from Beta, etc.) is derived from second visual elements 120, separated by sender classes (Alpha, Beta). The database with reference data 201 can be available, to the recipient of the invoices (e.g., to the buyer), and/or to a third party that collects the data for the recipient (e.g., an accountant that is external to the buyer). It is noted that some of the information can be the unique identifier (here: T=99999).

Reference data 201 has an assignment of data entries to the senders (i.e., classes) of the documents.

Assuming that the particular vendor Alpha has issued invoices to a buyer (or to multiple buyers) with single-digit numbers of products (e.g., A of Alpha) and with double-digit numbers of monetary amounts (e.g., B of Alpha). This example might appear overly simplified, but illustrates that the content of the information is not relevant here. Particular vendor Beta has issued invoices to a buyer (or to multiple buyers) with double-digit A and triple-digit B.

Training can result in optional rules that check OCR-results. In this simplified example, such optional rules would mark OCR-results with a non-single numbers A (from Alpha) as error, would mark OCR-results with single-digit B (from Alpha) as error as well. A similar rule would be applicable to Beta.

It is noted that reference data 501 can also be distributed to multiple physical locations, for example, for storing data regarding multiple buyers separately. As mentioned, a third party (e.g., the accountants) can collect data. As the third party can collect data for sender class Alpha documents and for sender class Beta document that are addressed to multiple buyers, separately of course), the third party has a pool of data, among them: document data in sender class Alpha to buyer 1, to buyer 2 ... buyer M, and document data in sender class Beta to buyer 1, to buyer 2 ... buyer M.

It is noted that data is not required for all combinations. Reference data 501 comprises data that is available.

For the second scenario, assuming that office Gamma has issued a communication with alpha-numeric indications of legal provisions (e.g., "Rule 69", "Rule 71(3)"), with alpha-numeric indications of time-frames (e.g., "within 6 months", "within 4 months"), and with texts etc. Reference data 501 can be data is a so-called docket system. Such systems track the communications (i.e., the documents) and the activities that are mentioned in the communications etc. There are correspondences and relations between data entries. For example, the legal provision "Rule 69" is related to a time-frame measured as "6 months", the legal provision "Rule 71(3)" is unidirectional related to a time frame measured as "4 months", etc.

To stay with the second scenario, it is possible (and sometimes typical) that the patent office Delta also communicates documents to the same recipient (i.e., applicant). Legal provisions are related to time-frames (measured in months), but the provisions and the time frames are different from that of Gamma.

Using reference data 501 results in improved accuracy for the rules. Training can result in a rule that checks OCR-results, much simplified "4 months" and "6 months" are allowed values, with as assignment to/from legal provisions.

It is noted that the information in reference data 501 usually does not comprise data that is usually needed to identify the sender class, such as visual elements 110 (logos), but that the unique identifiers in reference data 501 allow to create the appropriate rule.

### Results of the training

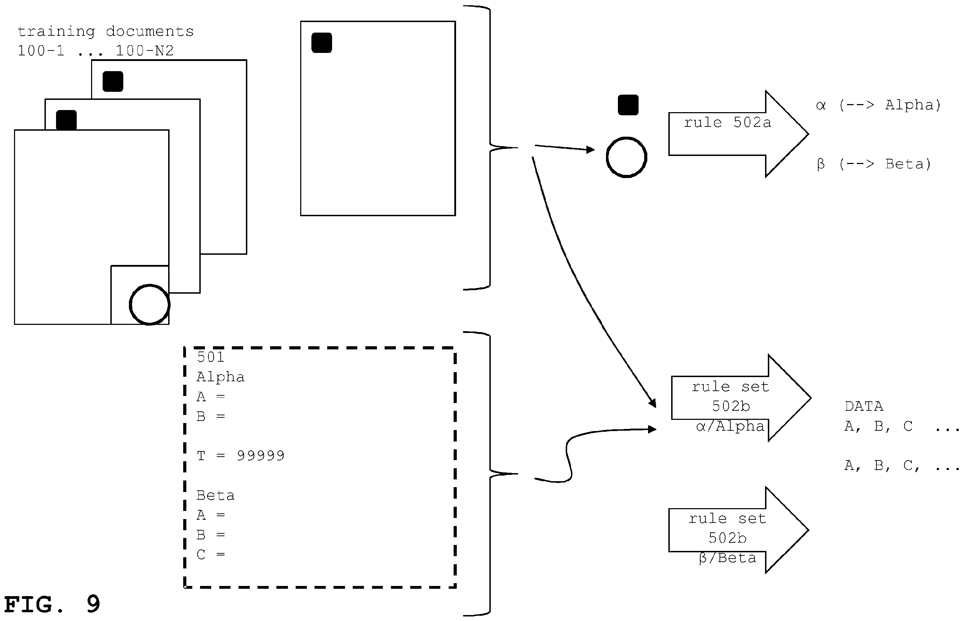

FIG. 9 illustrates reference data 501, training documents 102 and rule sets 502a, 502b that result from the training.

The relation of visual elements to sender classes is processed according to first rules sets 502a, as already explained. The first rules sets inspect first visual elements and allow the classification of documents in to classes. For example, particular senders use particular first visual elements, such as logos.

As explained above, the second training step uses unsupervised learning to provide second rules 502b for further classification of the data (first sub-step). A classification of sub-classes is optional. For example, one and the same particular sender uses different appearance or location of visual elements. In the second training step, training computer 202 determines the probability by that elements appear with particular coordinates.

Again looking at FIG. 5, there are probability zones of for the visual elements. Zone 130 is a zone for first visual element 110 in documents in visual class α. Zone 140 is a zone for first visual element 110 for documents in visual class β. Zone 150 is a zone for a second visual element 120 for documents in visual class α. Zone 160 is a zone for a second visual element 120 for documents in visual class β. Sub-zones are differentiated, in the example, one sub-zone for A, B and one sub-zone for C.

The zones are areas on document 100 for that the occurrence-probability for visual elements exceeds pre-defined thresholds.

The (unsupervised) learning can use statistics, from the image document. As a result, there are areas (and/or borders) identified as the zones.

There is a relation of elements in a particular class and the location (cf. the element-to-location relation). Assuming that documents with known classes (e.g., class α, class Alpha) are available (in training documents 102), training computer 202 identifies the zone "top left" as an area with a 99% probability of having a particular logo. This example is simplified and assumes Z=1 (one page document), but different pages can be used as well. There is a further relation of the class and the shape (appearance) of the visual element (the black square) that also indicates class α.

Since the visual classes α, β etc. are known (by application of rule 502a), the next rules to be determined take the difference into account. The next rules are available as rule 502b for α, and 502b for β. If the sender is known already (cf. the discussion above), the rules can be differentiated into 502b for Alpha, and 502b for Beta. Further differentiation is applicable for the second scenario (Gamma, Delta) and for any further scenario.

Likewise, there are threshold-exceeding probabilities for the second visual elements 120, with zone 150 and zone 160.

The third training step is supervised learning - i.e. learning in interaction with human expert users. This results in further details, for example to identify the coordinate of a particular content, such as a second visual element. The third training step takes advantage of the fact that the sender class of a document is known.

Taking the above example of the first scenario, OCR-techniques would recognize, for example, a field with the text "Invoice No." and with a four-digit number, for invoices from Alpha. There is a match in reference data 201, not to the particular four-digit number, but to the text "Invoice No.". Optionally, there is a potential match in reference data 201 for a data field "Invoice Number". The human expert (i.e. user 402 vie UI) can establish the relation: "Invoice No." on the document is to be mapped to "Invoice Number" in the computer, together with the four-digit number.

It is further possible to enquire user 402 for the difference between content that is applicable to all documents (in the sender class, such as the text "Invoice No") and that is different from document to document. Knowledge in the domain "invoices" can provide the optional rule to check for consistency. For example, invoices (from the same sender/vendor) are numbered with increasing numbers.

The granularity can be enhanced, by introducing sub-classes, for example, differentiating different documents from the same sender. In the second scenario, the patent office Gamma is identified as the sender (first rule 502a), with a user-solicited distinction between different second elements (second rule 502b): A document that is titled "communication according to provision 71(3)" belongs to a first sub-class, a document titled "notification" belongs to a second sub-class. Reference data can be used in addition, for example, to show (to the user) historic data (such a time-periods of 4 month for 71(3)).

As a result, second rule set 502b enables production computer 203 to process the second elements 120 (with alpha-numeric data) to de-code the information that is conveyed by second visual elements 140 into document data 503. Second model 502b is being trained in variants that are specific for different visual classes α, β etc. of the documents (and optionally to different sender classes Alpha, Beta). It is noted that generating rules uses reference data 501 as well.

In the fourth training step - supervised - rules set 502b can be further enhanced. The description uses the second scenario as example. Supposing the second rule set allows production computer 203 to extract the following information/data from documents from sender Gamma: document date (i.e. calendar date) and document sub-class (e.g., provision 71(3)) with time-frame 4 month.

This data allows the calculation of a further calendar data, according to the expert-added further rule: time-limit = document data plus time-frame.

Regarding the optional third training step, supervised as well, the documents can be further classified so that additional rules can be generated. Such rules are convenient to let production computer 203 enhance the document data. The third training step uses results from the first and second training steps.

Optionally, the operation of training computer 202 can be improved by taking further document properties into account. (The properties can comprise the attributes obtained from transmission data). During training (method 302), analyzing 312 training documents 102 to extract the visual features is performed from document images (i.e. if training documents 102 are paper-documents). For training documents 102 that are PDF-documents, some of the information to extract the visual features is already coded in the PDF-document, de-coding data from the second visual elements is simplified because the elements are coded with XY-location (optionally XYZ) and as data inside the PDF-document. For example, training could be performed in a hybrid approach (both as PDF and as document image).

Further, some of the PDF-documents may be enhanced by data-structures, sometimes in XML format (Extensible Markup Language) that link data with meta-data (e.g., a particular invoice number being data, in combination with tags that indicate the property of the data to be an invoice number). Instead of PDF, or in addition to PDF, the skilled person can use postscript or other publisher formats.

Similar improvements are possible for production computer 203 as well, receiving documents and applying the rules can be performed for PDF-documents (with or without enhancements). Hybrid approaches are possible as well.

It is noted that rules (of any rule set) can be classified into rules for paper-documents (image documents in intermediate form) and rules for PDF-documents.

Differentiating visual elements into first and second visual elements is convenient for explanation. Some elements can be both. For example, barcode element and/or QR-code element have visual features (e.g., lines, pixels in combination with the location etc.) that training computer 202 processes into first rule sets 502a. But training computer 202 can process them (with reference data) into second rule sets, thereby de-coding the information.

Alpha-numeric data (from second visual elements) can be derived (during training and production) from Latin letters A ...Z, from Latin letters a...z, figures 0....9, mathematical symbols, symbols for currencies, from letters from non-Latin writing systems (e.g. Chinese, Japanese, Korean, Russian etc.) and so on, provided that appropriate OCR-techniques are used. In embodiments, alpha-numeric data is coded with the Universal Coded Character Set (UCS, ISO/IEC 10646:2012)

### Transmission data

Shortly returning to FIG. 1, the description now goes below the dashed line and investigates how computer 200 obtains transmission data 800. In other words, the description explains how computer 200 processes protocol data 740 that is generated during the transmission time interval, and how computer 200 compares the results to data from the creation interval (i.e., document data 500, attributes 580). As mentioned, computer 200 can obtain transmission data 800 in parallel to obtaining document data 500, during the processing time interval.

### Motivation for classifying the transmission

As explained already, many documents have a function that triggers the recipient to take an action in relation to the sender. To stay with the invoice example, the recipient of an invoice pays a monetary amount to the sender of the document (usually to an account identified as part of the document data). However, the recipient has to use the correct account (cf. the above attribute purpose) and has the use an account that is related to the sender (cf. the above authentication purpose). To support that, the computer at the recipient categorizes the transmission according to particular transmission modalities observed during transmission.

### Document attributes

As explained above, the recipient can use transmission classes 890 to identify attributes 580 of document 100, cf. purpose (A). By way of example, it can be assumed that a particular sender 760 (e.g. the fictitious vendor Alpha) sends invoices with attachments in electronic form (PDF-format) via a particular node. The node combines the attachments to the invoices. Recipient 780 needs to process the attachments, for example, by storing them.

A particular transmission class 890 can differentiate invoices with or without attachments, and recipient 780 can - for vendor Alpha - trigger the storing. Of course, Alpha could indicate "with attachment" on the document, and computer 200 can derive such information as document data 500 (with one of the actions being storing), but here the identification of attachments being transmitted increases the reliability that the attachment is stored indeed.

In a further example, the (fictitious) vendor Beta sends invoices from two separate locations and indicates separate bank account information. Using transmission classes 590 (one class indicating location A, the other class indicating location B) can help to check data consistency. Document data comprises the account information, but the transmission class can support a further check.

Again, the bank account number is part of document data 500 (obtained from document 100, here in the invoice), but the additional information via transmission data 800 / transmission class 890 increases the reliability. Recipient computer 200 would find inconsistencies during a comparison (cf. arrow 750) of classes 590 and 890.

### Authentication

In view of above-mentioned purpose (B), the sender-document relation is derivable from the document data and indicates the sender of the document. However, the relation may be disturbed. The entity that pretends to be the sender has potentially provided a fake document (e.g., with "wrong" accounting information). Technically, there is a task authenticate the sender-to-document relation.

Looking at traditional techniques, (paper) documents can be enhanced by technical features such as labels with holograms. The features support the authentication by the recipient. Depending on the function of the document, the features can vary and further problems might be created further. For example, a birth certificate may be enhanced by a particular label or by a particular code, but 70 years later the label and the code is no longer understood. For invoices, using particular physical labels may not be justified.

As a solution, computer 200 provides attributes 580 with authentication information (or authentication statements). Computer 200 checks transmission class 890 for consistency with document class 590. Details will be explained in connection with table 750 (cf. the line in FIG. 1). For example, vendors Alpha and Beta may send invoices through particular channels (a channel for Alpha, and a different channel for Beta), and data collected during transmission may be typical for Alpha or Beta.

The computer can detect deviations by comparing document classes and transmission classes. Other entities (that pretend to be the sender) can't copy everything (i.e., make a fake invoice) but have to use transmission modalities that differ from the original.

### Considering the transmission of the document

Having explained the motivation by example, the description now explains transmission classification with the focus on authentication (purpose (B)), but the principles are applicable to identifying attributes (of the document) as well (purpose (A)). In the following, the description takes the transmission context of the document into account.

FIG. 10 illustrates an overview to the transmission of document 100 (cf. FIG. 1) from sender 760 to recipient 780 via channel 770. Simplified, there are two basic transmission modalities: paper-documents are physically transported and PDF-documents are forwarded electronically (cf. the description above). For this overview, the phases do not matter and the references are indicated according to the xx0 convention.

Sender 760 inserts document 100 into container 700. Examples comprise: paper documents into envelopes, PDF-documents into emails, PDF-document uploaded to a portal to be downloaded from the portal, etc. Hybrid approaches - such as mailing a CD-ROM with a PDF-document - are also possible, but for simplicity, the description stays with the basic modalities.

Sender 760 forwards container 700 to channel 770. Examples comprise a postal service, a computer network, the internet, etc.

It is noted that sender 760 is the entity that actually performs inserting and forwarding. Sender 760 is not necessarily the entity that is identified as "sender" (part of document data). In other words, document data 500 may identify an entity that differs from sender 760 (as with fake documents).

Channel 770 transmits container 700 (with document 100) to recipient 780 and thereby collects transmission data in association with container 700, or in association with channel 770. It is potentially more difficult for a "fake sender" to let the transmission appear similar to the original.

Recipient 780 separates document 100 and protocol data 740 (of a protocol) that is a collection of data that becomes available during transmission. In other words, the protocol is the electronic form of that collection. FIG. 10 illustrates protocol 740 as being part of container 700; this is convenient for illustration but just an example.

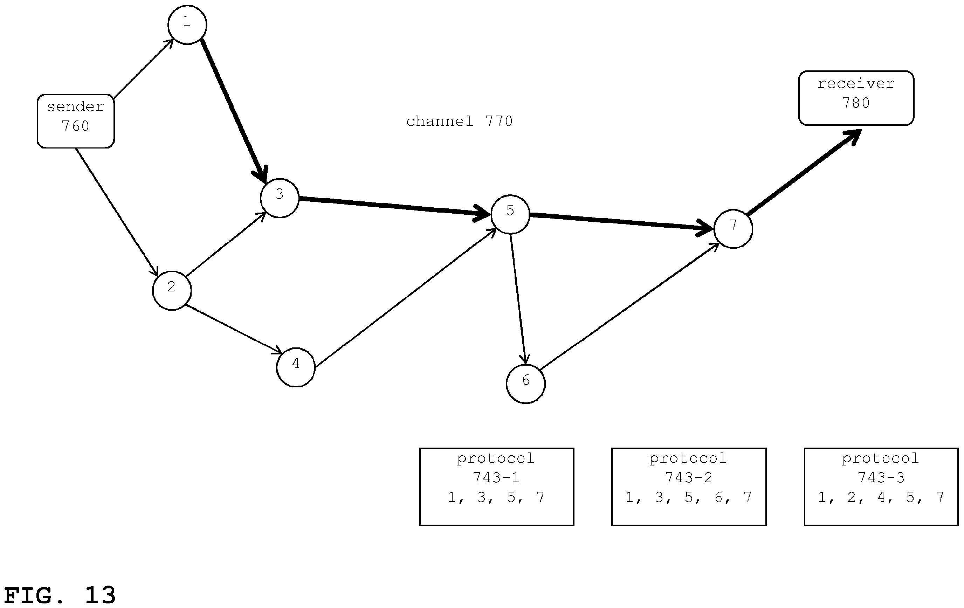

In other words, protocol data 740 comprises data regarding the particular transmission modalities (i.e. transmission elements, for particular container 700). The data can comprise:
- the identification of the sender 760 (sender 760 that forwards container 700 to channel 770, and/or a sender ID that is given on the container),
- routing information, such as the identification of intermediate transmission nodes, such as internet nodes, hubs of the postal service. cf. FIG. 13 with details),
- identification of the recipient (usually not optional, because the channel uses the data for routing),
- especially for electronic communication in general, time-stamp data for transmission events at the beginning of the transmission (start time), during the transmission (such as transit interval between nodes) and at the end of the transmission (arrival time),
- data regarding quantities, such as message size or file size (i.e. the container with the document, in kilo byte of megabyte),
- data regarding compression and/or encryption during transmission (e.g., the container being - at least temporarily - a zip-archive, an rar-archive, or the like),
- data regarding the container (e.g., an identification of a data format, of an envelope size etc.)

The person of skill in the art can use further data. It is noted that protocol data can be differentiated according to the layers of the Open Systems Interconnection model (OSI model, ITU-T standard X.200). Data can be specific to the Physical Layer 1, Data Link Layer 2, Network Layer 3, Transport Layer 4, Session Layer 5, Presentation Layer 6, and Application Layer 7.
- To take one example for layer 2, protocol data can comprise identification data of the physical devices that participated in the transmission, such as Media Access Control (MAC) addresses.
- To take one example for layers 3-5, transmission data can comprise any of the following: IP addresses (of the devices), type of a browser (if the PDF was communicated from sender to recipient through uploading via a portal, via HTTP/HTTPS protocols),
- To take one example for the layers 6-7, transmission data can refer to details for the document and of the container (such as time stamp data of creating the PDF-document, time of sending, type of software used to create the PDF-document).

Collecting protocol data 740 can be specific to container 700 and to channel 770 (i.e. differentiated by container and channel). There is a minor difference in the wording: channel 770 "collects" and computer 200 "receives", but both terms can be considered as synonyms.
- In first example, container 700 is an envelope with stamps from the postal service.
- In a second example, container 700 is an email collects tracing and tracking information from various computer network nodes, obtains time-stamps and the like.
- In a third example, container 700 is the portal that tracks the transmission and forwards the data to recipient 780.
- In a fourth example, container 700 is the portal that stores document 100 and that forwards an access link (or pointer, e.g., implemented by an URL). In view of that, the link is the document that is being transmitted, and the data-structure that conveys information (e.g., the PDF-file) is the document.

Again, there are many ways to obtain protocol data 740, and protocol data 740 can contain data that does not support obtaining the purpose-oriented attributes. To stay with the authentication purpose (B), protocol data 740 may indicate that the container is an envelope or an email, but such kind of indication does not contribute to the attributes (because most of paper documents are transported in envelopes).

Therefore, protocol data 740 is being processed into transmission data 800. The techniques for that correspond to the techniques for obtaining document data 500 from document 100, the person of skill in the art can adapt machine learning ML by simply replacing visual elements 110/120 with transmission elements 710/720.

Simplified, visual elements differentiate documents (with granularity of sender classes and particular data), and transmission elements differentiate transmissions (with granularity such as, for example, senders, or particular time points).

The description therefore explains obtaining transmission data 800 by way of example.

A hybrid approach is possible and example for the example of paper documents in envelope containers: Upon receipt (by recipient 780), container 200 is being photographed and the photo becomes protocol data 740. At the same time, the photo is also the intermediate form of a document image. This image is treated as if it would be document 200 and is processed according to visual features, as described above. The resulting document data 500 (cf. FIGS. 1-2) can indicate, for example, particular logos that are identified, stamps of a particular postal service (first transmission elements 710), and particular data that are identified (second transmission elements 720, such as postal codes) as well. In analogy to the first and second visual elements 110/120, the rules can be related with each other. For example, a particular postal service uses particular conventions for postal codes, and the rules could differentiate this.

This document data 500 can be treated as transmission data 800 and can indicate information derived from the photo, such as, for example, the country of the postal service (e.g., AT, DE, FR) by that the envelope was carried initially.

In the example, it is part of protocol data 740 that the containers are envelopes, but this is not a transmission element, because all containers are envelopes. Differentiating transmission elements 710/720 from non-relevant data is subject to training, as explained (for document data).

Assuming in the example, that computer 200 obtains transmission data 800 as follows: (containers 1 to 20) envelope = window; stamp = AT; logo = Alpha; (containers 21 to 40) envelope = window; stamp = DE; logo = Beta; (containers 41-42) envelope = window; stamp = DE; logo = Alpha; (containers 43-99) envelope = window; stamp = FR; logo = Gamma. Data 800 could also include postal codes obtained through OCR.

Training can identify features that are differentiating, as the AT/DE/FR stamps, and can identify features that can be found all of the time, such as the envelopes having windows for the addresses. Training might identify the location of the window, to support the OCR-recognition. According to the rules that result from training, computer 200 being production computer 203 may ignore the windows-feature.

Transmission classes 890 can be derived (by training), for example into classes that correspond to particular stamps and logos, such as classes AT-Alpha, DE-Beta, and FR-Gamma. Such a classification can be based on the number of containers counted (e.g., DE-Alpha ignored due to relatively small number). Using reference data (cf. computer 201) can make training more accurate, and can event lead to a further class with further information (e.g. DE-Alpha-Fake).

As illustrated much simplified by table 750, transmission classes 890 can be related to document classes 190. In the example, document classes correspond to the sender classes (explained above Alpha, Beta, Gamma, obtained from documents through logos on the documents). The inter-class relations (table 750) can be obtained through machine learning (with or without supervision). The relations are given by "positive" relations (absence of fake).

As a consequence of different functions (i.e., different actions to trigger), most of transmission data is distinct from document data. Transmission data allows channel 770 to transmit container 700 but not to trigger the action of document 100. Occasionally there is some overlap (the name of the sender/recipient printed on the container and on the document), but that is not relevant.

In other words, taking the confidentiality of transmission into account, protocol data 740 can't contain the content of document 100. However, there is a correlation between senders (identified from visual features of the document) and senders (or groups of senders) identified through protocol data 740.

The relations in table 750 can be considered as rules for obtaining attributes 580. To give an example for purpose (A), class matching with a particular sender class can instruct computer 200 to perform an additional processing step (such a checking that the attachment was stored). To give an example for purpose (B), class miss-match (e.g., DE-Alpha vs. Alpha) can indicate a potential fake.

Those of skill in the art can modify the approach. Non-identification of a relation (as in table 750) would lead to "non-authentication". For example, a document from Alpha mailed through the postal service of DE may still be regarded as authentic.

Or, to use the purpose of identifying document attributes in a further example: the sender may not be identified from the document data (e.g., due to OCR-error) for a particular document. In such cases, using data from table 750 may help to find the document classification.

In other words, using transmission data 800 (and the aggregation into transmission classes 890) can make document processing more precise.

### Computers acting in different phases

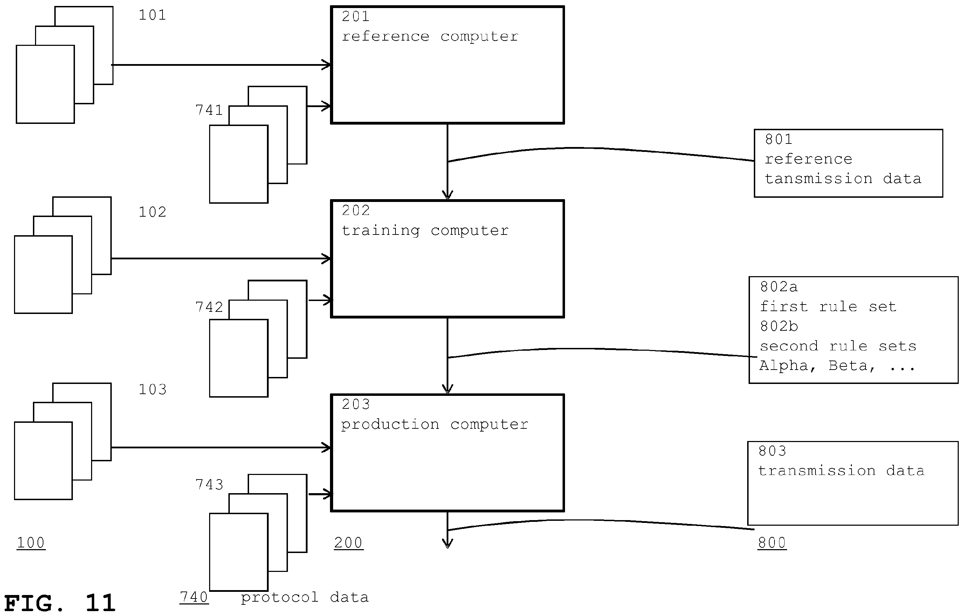

FIG. 11 illustrates an overview to the computers in use by recipient 780. Based on FIG. 2, it illustrates how computer 200 processes protocol data 740 to transmission data 800 (optionally to transmission classes) in the reference phase, the training phase and the production phase. For simplicity, human users are omitted here, because their involvement has already been explained in FIG. 2.

Depending on the phase, computer 200 can be reference computer 201, training computer 202 and production computer 203 (cf. FIG 2). Protocol data 740 is available as reference protocol data 741, training protocol data 742 and production protocol data 743.

Reference computer 201 provides reference transmission data 801 (i.e., transmission data from reference transmissions). For example, computer 201 provides reference data 501 (by processing documents 101) as in FIG. 2 and also provides reference transmission data 801. For example, the reference could indicate a particular attribute, such as a particular transmission class in relation to a particular document class as indicating a potential fake.

Training computer 202 provide training transmission data, here in the form of rule sets. For example, the first rule set 802a could be a rule to identify a particular sender 760, as explained in connection with FIG. 10, and the second rule set 802b could be a rule to obtain sender-specific transmission elements, such as OCR-reading particular address information (from envelopes) as explained by example above.

Further examples for training have been explained with FIG. 10, and it is again noted that the principles to derive rules from protocol data (with transmission elements) are the same as the principle explained for documents with visual features.

Production computer 803 provides transmission data 803. Transmission data 803 can be compared to document data 103 (FIG. 2) to enhance document data by attributes 580 as explained in connection with table 750.

### Flow-chart of a method

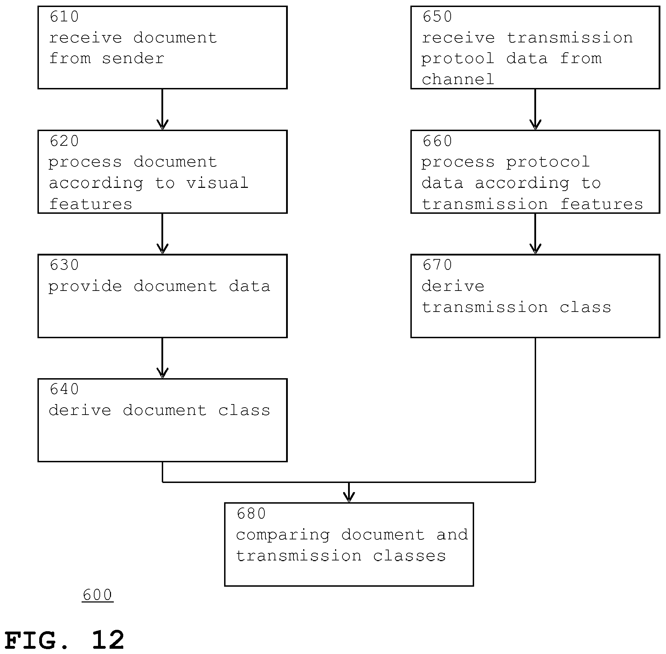

FIG. 12 illustrates a flow-chart diagram of computer-implemented method 600 to identify attributes of document 100 that has being transmitted from sender 760 to recipient 780. Method 600 is executed by computer 200 that is associated with recipient 780 of document 100. Method 600 is being explained in a notation (xx0) that is not specific to phases. Method 600 can be used in all phases. Method 600 comprises two step sequences 610/620/630/640 (illustrated on the left side of the figure) and 650/660/670 (right side) that can be executed in parallel.

In receiving step 610, computer 200 receives document 100 from sender 760. Receiving can comprise to bring the document into electronic form (digital image as intermediate form).

In processing step 620, computer 200 applies rules (such as rules 502a, 502b explained with FIGS. 6-7) according to visual features 110, 120 (cf. FIG. 5) of document 100. Thereby, computer 200 provides - step 630 - document data 500. Details have been explained above, for example for FIGS. 1 and 8-9.

In deriving step 640, computer 200 derives document class 590. Details had been explained above, for example, in the context of sender classes.

In receiving step 650, computer 200 receives protocol data 740 that is associated with the transmission of document 100 from sender 760 to recipient 780. Computer 200 receives protocol data from channel 770 that transmitted document 100 (cf. the explanations with FIG. 10).

Until here, the step sequence 610/620/630/640 corresponds to the approach explained above (cf. FIG. 7).

In processing step 660, computer 200 processes protocol data 740 according to transmission elements 710, 720 by applying protocol rules to obtain transmission data (800). In deriving step 670, computer 200 derives transmission class 890, as explained.

In comparing step 680, computer 200 compares document class 590 and transmission class 890 by applying comparison rules (explained with table 750) to provide document attribute 580.

Optionally, in comparing step 680, computer 200 provide document attribute 580 as a statement regarding the authentication of the sender 760. Optionally, in comparing step 680, computer 200 provides document attribute 580 as an enhancement to the document data 500.

Optionally, in receiving protocol data 650, computer 200 receives protocol data 740 from container 700 by that document 100 has been transmitted through channel 770.

Computer 200 executes processing steps 620, 660 by applying rules obtained through training. The methodology for training in view of document transmission has been explained in connection with FIG. 11. Training has also been explained above with great detail, and the person of skill in the art can apply the teachings. Some of the training is supervised training, some is non-supervised training. For example, reference protocol (cf. computer 201 in FIG. 11) can be identified by human users as belonging to non-authentic document transmissions.

### Channel example

FIG. 13 illustrates channel 770 (from sender 760 to recipient 780) with nodes 1-7. FIG. 13 also shows protocol data 740-1, 740-2 and 740-3.

Identifying nodes and counting the use of particular nodes can be regarded as identifying particular transmission elements 710/720. The distinction into first and second transmission elements is not relevant here. In other words, the nodes are transmission elements, and applying the analogy (above the dashed line in FIG. 1), the nodes can be identified due to features that they have in protocol 740 (e.g., the text "<node> .. </node>").

During training, computer 202 (cf. FIG. 11) would process a number of protocols (such as, for example, 1.000 or more protocols) and would obtain rules (cf. rules 802a, 802b). The rules are symbolized here by the graph. The visualization of a node topology serves as illustrative example, but presenting the channel (to a user) is not required. Edges (arrows) between the nodes indicate transmission paths, and bold arrows stand for paths more frequently used than others.

It can be assumed that during training, computer 202 (cf. FIG. 10) identifies the transmission path via nodes 1, 3, 5, 7 as a standard route, and identifies path 1, 3, 5, 6, 7 as a slightly varied path that also occurs frequently.

The rules sets any path via at least nodes 1, 3, 5 and 7 (in that order) to be a transmission in the standard class (cf. 890 in FIG. 1, 10 ), and sets any other paths to the non-standard class.

The standard path 1, 3, 5, 6 can be related (by training, cf. table 750) to a particular sender (from document data), resulting in further rules.

During production, computer 203 (cf. FIG. 10) would processes protocol data 743-1, 743-2 and 743-3 of particular transmissions of documents 103-1, 103-2, 103-3 (cf. FIG. 2) to transmission data. Since the rule does not call for counting, it can be assumed that protocol data is the same as transmission data. In other words, the simplified example of FIG. 13 disregards further data that might become available.

Protocol data 743-1 and 743-2 (i.e. transmission data) coincide with the standard class (the minor deviation from node 5 to 7 via node 6 does not matter), and protocol data 743-3 would coincide with the non-standard class. In the particular example, node 3 was left out.

As explained in connection with FIGS. 1 and 10, a deviation from a standard transmission pattern (for a particular document class such as Alpha) can be related (table 750) to a particular attribute 580 (e.g., "non-authenticated"). Having explained an example, the person of skill in the art can implemented further rules and relations.

The interaction with human users (cf. 401, 402, 403 in FIGS. 2 and 11) can be minimized. Training can be supervised training and non-supervised training.

FIG. 13 is simplified in focusing on the nodes as transmission elements, but further elements can be documented in protocol data as well. There is an analogy (from the above-introduced "visual classes") to transmission feature classes: the nodes belong to one class, and the edges belong to a different class. Also, to stay with the analogies, the protocol (and computer 200 processing it) can use techniques such as feature vectors, feature descriptors and so.

### Generic computer

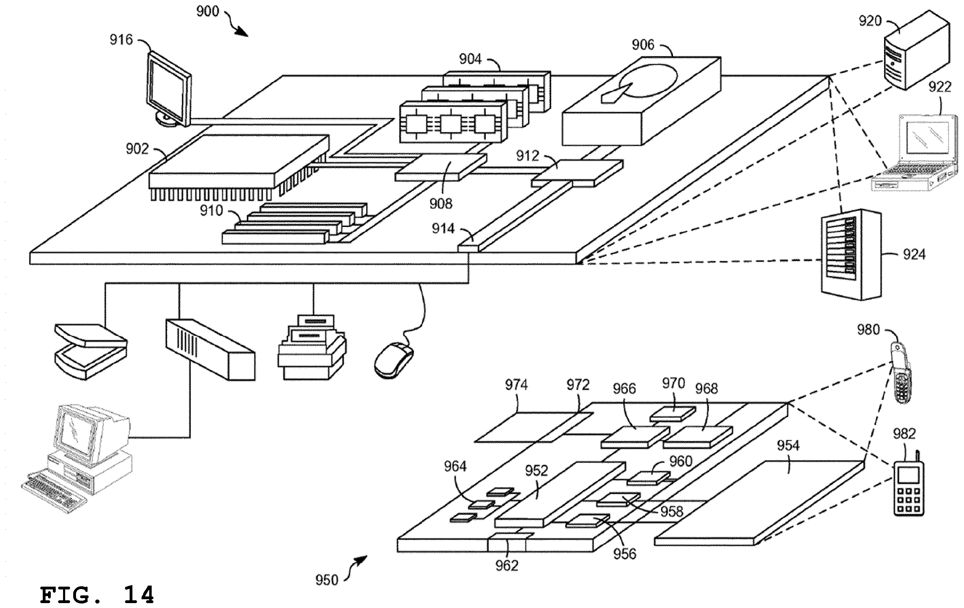

FIG. 14 is a diagram that shows an example of a generic computer device 900 and a generic mobile computer device 950, which may be used with the techniques described here. Computing device 900 is intended to represent various forms of digital computers, such as laptops, desktops, workstations, personal digital assistants, servers, blade servers, mainframes, and other appropriate computers. Generic computer device may 900 correspond to the computer system 200 (or to any computer 201, 202, 203) of FIGS. 1-2. Computing device 950 is intended to represent various forms of mobile devices, such as personal digital assistants, cellular telephones, smart phones, and other similar computing devices. The components shown here, their connections and relationships, and their functions, are meant to be exemplary only, and are not meant to limit implementations of the inventions described and/or claimed in this document.

Computing device 900 includes a processor 902, memory 904, a storage device 906, a high-speed interface 908 connecting to memory 904 and high-speed expansion ports 910, and a low speed interface 912 connecting to low speed bus 914 and storage device 906. Each of the components 902, 904, 906, 908, 910, and 912, are interconnected using various busses, and may be mounted on a common motherboard or in other manners as appropriate. The processor 902 can process instructions for execution within the computing device 900, including instructions stored in the memory 904 or on the storage device 906 to display graphical information for a GUI on an external input/output device, such as display 916 coupled to high speed interface 908. In other implementations, multiple processors and/or multiple buses may be used, as appropriate, along with multiple memories and types of memory. Also, multiple computing devices 900 may be connected, with each device providing portions of the necessary operations (e.g., as a server bank, a group of blade servers, or a multi-processor system).

The memory 904 stores information within the computing device 900. In one implementation, the memory 904 is a volatile memory unit or units. In another implementation, the memory 904 is a non-volatile memory unit or units. The memory 904 may also be another form of computer-readable medium, such as a magnetic or optical disk.

The storage device 906 is capable of providing mass storage for the computing device 900. In one implementation, the storage device 906 may be or contain a computer-readable medium, such as a floppy disk device, a hard disk device, an optical disk device, or a tape device, a flash memory or other similar solid state memory device, or an array of devices, including devices in a storage area network or other configurations. A computer program product can be tangibly embodied in an information carrier. The computer program product may also contain instructions that, when executed, perform one or more methods, such as those described above. The information carrier is a computer- or machine-readable medium, such as the memory 904, the storage device 906, or memory on processor 902.

The high speed controller 908 manages bandwidth-intensive operations for the computing device 900, while the low speed controller 912 manages lower bandwidth-intensive operations. Such allocation of functions is exemplary only. In one implementation, the high-speed controller 908 is coupled to memory 904, display 916 (e.g., through a graphics processor or accelerator), and to high-speed expansion ports 910, which may accept various expansion cards (not shown). In the implementation, low-speed controller 912 is coupled to storage device 906 and low-speed expansion port 914. The low-speed expansion port, which may include various communication ports (e.g., USB, Bluetooth, Ethernet, wireless Ethernet) may be coupled to one or more input/output devices, such as a keyboard, a pointing device, a scanner, or a networking device such as a switch or router, e.g., through a network adapter.

The computing device 900 may be implemented in a number of different forms, as shown in the figure. For example, it may be implemented as a standard server 920, or multiple times in a group of such servers. It may also be implemented as part of a rack server system 924. In addition, it may be implemented in a personal computer such as a laptop computer 922. Alternatively, components from computing device 900 may be combined with other components in a mobile device (not shown), such as device 950. Each of such devices may contain one or more of computing device 900, 950, and an entire system may be made up of multiple computing devices 900, 950 communicating with each other.

Computing device 950 includes a processor 952, memory 964, an input/output device such as a display 954, a communication interface 966, and a transceiver 968, among other components. The device 950 may also be provided with a storage device, such as a microdrive or other device, to provide additional storage. Each of the components 950, 952, 964, 954, 966, and 968, are interconnected using various buses, and several of the components may be mounted on a common motherboard or in other manners as appropriate.

The processor 952 can execute instructions within the computing device 950, including instructions stored in the memory 964. The processor may be implemented as a chipset of chips that include separate and multiple analog and digital processors. The processor may provide, for example, for coordination of the other components of the device 950, such as control of user interfaces, applications run by device 950, and wireless communication by device 950.

Processor 952 may communicate with a user through control interface 958 and display interface 956 coupled to a display 954. The display 954 may be, for example, a TFT LCD (Thin-Film-Transistor Liquid Crystal Display) or an OLED (Organic Light Emitting Diode) display, or other appropriate display technology. The display interface 956 may comprise appropriate circuitry for driving the display 954 to present graphical and other information to a user. The control interface 958 may receive commands from a user and convert them for submission to the processor 952. In addition, an external interface 962 may be provide in communication with processor 952, so as to enable near area communication of device 950 with other devices. External interface 962 may provide, for example, for wired communication in some implementations, or for wireless communication in other implementations, and multiple interfaces may also be used.

The memory 964 stores information within the computing device 950. The memory 964 can be implemented as one or more of a computer-readable medium or media, a volatile memory unit or units, or a non-volatile memory unit or units. Expansion memory 984 may also be provided and connected to device 950 through expansion interface 982, which may include, for example, a SIMM (Single In Line Memory Module) card interface. Such expansion memory 984 may provide extra storage space for device 950, or may also store applications or other information for device 950. Specifically, expansion memory 984 may include instructions to carry out or supplement the processes described above, and may include secure information also. Thus, for example, expansion memory 984 may act as a security module for device 950, and may be programmed with instructions that permit secure use of device 950. In addition, secure applications may be provided via the SIMM cards, along with additional information, such as placing the identifying information on the SIMM card in a non-hackable manner.

The memory may include, for example, flash memory and/or NVRAM memory, as discussed below. In one implementation, a computer program product is tangibly embodied in an information carrier. The computer program product contains instructions that, when executed, perform one or more methods, such as those described above. The information carrier is a computer- or machine-readable medium, such as the memory 964, expansion memory 984, or memory on processor 952, that may be received, for example, over transceiver 968 or external interface 962.

Device 950 may communicate wirelessly through communication interface 966, which may include digital signal processing circuitry where necessary. Communication interface 966 may provide for communications under various modes or protocols, such as GSM voice calls, SMS, EMS, or MMS messaging, CDMA, TDMA, PDC, WCDMA, CDMA2000, or GPRS, among others. Such communication may occur, for example, through radio-frequency transceiver 968. In addition, short-range communication may occur, such as using a Bluetooth, WiFi, or other such transceiver (not shown). In addition, GPS (Global Positioning System) receiver module 980 may provide additional navigation- and location-related wireless data to device 950, which may be used as appropriate by applications running on device 950.

Device 950 may also communicate audibly using audio codec 960, which may receive spoken information from a user and convert it to usable digital information. Audio codec 960 may likewise generate audible sound for a user, such as through a speaker, e.g., in a handset of device 950. Such sound may include sound from voice telephone calls, may include recorded sound (e.g., voice messages, music files, etc.) and may also include sound generated by applications operating on device 950.

The computing device 950 may be implemented in a number of different forms, as shown in the figure. For example, it may be implemented as a cellular telephone 980. It may also be implemented as part of a smart phone 982, personal digital assistant, or other similar mobile device.

Various implementations of the systems and techniques described here can be realized in digital electronic circuitry, integrated circuitry, specially designed ASICs (application specific integrated circuits), computer hardware, firmware, software, and/or combinations thereof. These various implementations can include implementation in one or more computer programs that are executable and/or interpretable on a programmable system including at least one programmable processor, which may be special or general purpose, coupled to receive data and instructions from, and to transmit data and instructions to, a storage system, at least one input device, and at least one output device.

These computer programs (also known as programs, software, software applications or code) include machine instructions for a programmable processor, and can be implemented in a high-level procedural and/or object-oriented programming language, and/or in assembly/machine language. As used herein, the terms "machine-readable medium" and "computer-readable medium" refer to any computer program product, apparatus and/or device (e.g., magnetic discs, optical disks, memory, Programmable Logic Devices (PLDs)) used to provide machine instructions and/or data to a programmable processor, including a machine-readable medium that receives machine instructions as a machine-readable signal. The term "machine-readable signal" refers to any signal used to provide machine instructions and/or data to a programmable processor.

To provide for interaction with a user, the systems and techniques described here can be implemented on a computer having a display device (e.g., a CRT (cathode ray tube) or LCD (liquid crystal display) monitor) for displaying information to the user and a keyboard and a pointing device (e.g., a mouse or a trackball) by which the user can provide input to the computer. Other kinds of devices can be used to provide for interaction with a user as well; for example, feedback provided to the user can be any form of sensory feedback (e.g., visual feedback, auditory feedback, or tactile feedback); and input from the user can be received in any form, including acoustic, speech, or tactile input.

The systems and techniques described here can be implemented in a computing device that includes a back end component (e.g., as a data server), or that includes a middleware component (e.g., an application server), or that includes a front end component (e.g., a client computer having a graphical user interface or a Web browser through which a user can interact with an implementation of the systems and techniques described here), or any combination of such back end, middleware, or front end components. The components of the system can be interconnected by any form or medium of digital data communication (e.g., a communication network). Examples of communication networks include a local area network ("LAN"), a wide area network ("WAN"), and the Internet.

The computing device can include clients and servers. A client and server are generally remote from each other and typically interact through a communication network. The relationship of client and server arises by virtue of computer programs running on the respective computers and having a client-server relationship to each other.

In addition, the logic flows depicted in the figures do not require the particular order shown, or sequential order, to achieve desirable results. In addition, other steps may be provided, or steps may be eliminated, from the described flows, and other components may be added to, or removed from, the described systems, provided that the resulting embodiments are within the scope of the following claims.

## Claims

1. Computer-implemented method (600) executed by a computer (200) that is associated with a recipient (780) of a document (100), the method (600) to identify attributes (580) of the document (100), the method (600) comprising:
receiving (610) the document (100, 103) from a sender (760) and processing (620) the document (100) according to visual elements (110, 120) of the document (100) by applying rules (502a, 502b) to provide (630) document data (500, 503), deriving (640) a document class (590);
receiving (650) protocol data (740) that is associated with the transmission of the document (100, 103) from the sender (760) to the recipient (780), receiving the protocol data (740-1, 740-2, 740-3) from a channel (770) that transmitted the document (100), wherein a transmission path is the path via the nodes of the channel, which are identified by processing the protocol data of the transmission of the document;
obtaining the identification of nodes (1, 3, 5, 7) of the channel (770) that by training have been identified as belonging to transmission in a standard class, wherein the standard class comprises transmission paths, which have been identified as a standard route during training, standard path in the following, wherein - by training - the standard path has been related to a particular document class, and wherein the standard class and a non-standard class are transmission classes;
processing (660) the protocol data (740) according to transmission elements (710, 720) by applying protocol rules (742) to obtain transmission data (800, 503), and deriving (670) a transmission class (890), with identifying particular transmission elements by identifying nodes (1, 2, 3, 4, 5, 6, 7) of the channel (770) and by classifying the transmission path to coincide with a standard class or with a non-standard class; and
comparing (680) the document class (590) and the transmission class (890) by applying comparison rules (750) to provide a document attribute (580).

2. Method (600) according to claim 1, wherein in the comparing step (680), the document attribute (580) is provided as a statement regarding the authentication of the sender (760).

3. Method (600) according to any one of the preceding claims, wherein the receiving protocol data step (650) is performed by receiving protocol data (740) from a container (700) by that the document (100) has been transmitted through the channel (770).

4. Method (600) according to any of claim 3, wherein the receiving protocol data step (650) is executed for the container (700) being an envelope, with photographing the container (700) to an image, and processing the visual features of the image to obtain the protocol data from the image.

5. Method (600) according to claim 4, wherein the protocol data from the image data is derived from logos, stamp or postal codes.

6. Method (600) according to any one of the preceding claims, wherein in the step processing protocol data, the transmission elements are elements selected from the following:
the identification of the sender, routing information, identification of the recipient, time-stamp data for transmission events, data regarding quantities, data regarding compression and/or encryption during transmission, and data regarding a container.

7. Method (600) according to any one of the preceding claims, wherein the processing steps (620, 660) are performed by applying rules obtained through training.

8. A computer program product which - when loaded into a memory of a computer and being executed by at least one processor of the computer - causes the computer to perform the steps of the computer-implemented method according to any of claims 1-7.

9. A computer (200) for applying rules to computer-implemented deriving data from transmission protocols (740) that are associated with the transmission of the documents from the sender (760) to the recipient (780) via a channel (770), wherein the rules are generated by training, the computer (200) adapted to perform a computer-implemented method according to any of claims 1-7.

## Patentansprüche

1. Computerimplementiertes Verfahren (600), das mittels eines Computers (200) ausgeführt wird, der einem Empfänger (780) eines Dokuments (100) zugeordnet ist, wobei das Verfahren (600) Attribute (580) des Dokuments (100) identifiziert, das Verfahren (600) umfassend:
Empfangen (610) des Dokuments (100, 103) von einem Sender (760) und Verarbeiten (620) des Dokuments (100) gemäß visuellen Elementen (110, 120) des Dokuments (100) mittels Anwenden von Regeln (502a, 502b), um Dokumentendaten (500, 503) bereitzustellen (630), Ableiten (640) einer Dokumentenklasse (590);
Empfangen (650) von Protokolldaten (740), die der Übertragung des Dokuments (100, 103) von dem Sender (760) an den Empfänger (780) zugeordnet sind, Empfangen der Protokolldaten (740-1, 740-2, 740-3) von einem Kanal (770), der das Dokument (100) übertragen hat, wobei ein Übertragungspfad der Pfad über die Knoten des Kanals ist, die mittels Verarbeiten der Protokolldaten der Übertragung des Dokuments identifiziert werden;
Erhalten der Identifikation von Knoten (1, 3, 5, 7) des Kanals (770), die mittels Training als zu der Übertragung in einer Standardklasse gehörend identifiziert wurden, wobei die Standardklasse Übertragungspfade umfasst, die während des Trainings als Standardroute identifiziert wurden, Standardpfad im Folgenden, wobei - mittels Training - der Standardpfad auf eine spezielle Dokumentenklasse bezogen wurde, und wobei die Standardklasse und eine Nicht-Standardklasse Übertragungsklassen sind;
Verarbeiten (660) der Protokolldaten (740) gemäß den Übertragungselementen (710, 720) mittels Anwenden von Protokollregeln (742), um Übertragungsdaten (800, 503) zu erhalten, und Ableiten (670) einer Übertragungsklasse (890), mit Identifizieren spezieller Übertragungselemente mittels Identifizieren von Knoten (1, 2, 3, 4, 5, 6, 7) des Kanals (770) und mittels Klassifizieren des Übertragungspfads, um mit einer Standardklasse oder mit einer Nicht-Standardklasse zu übereinzustimmen; und
Vergleichen (680) der Dokumentenklasse (590) und der Übertragungsklasse (890) mittels Anwenden von Vergleichsregeln (750), um ein Dokumentenattribut (580) bereitzustellen.

2. Verfahren (600) nach Anspruch 1, wobei in dem Vergleichsschritt (680) das Dokumentenattribut (580) als eine Aussage bezüglich der Authentifizierung des Senders (760) bereitgestellt wird.

3. Verfahren (600) nach einem der vorstehenden Ansprüche, wobei der Schritt des Empfangens (650) von Protokolldaten mittels Empfangen von Protokolldaten (740) aus einem Container (700) durchgeführt wird, mittels dessen das Dokument (100) durch den Kanal (770) übertragen wurde.

4. Verfahren (600) nach einem von Anspruch 3, wobei der Schritt des Empfangens (650) von Protokolldaten für den Container (700), der ein Umschlag ist, ausgeführt wird, mit einem Fotografieren des Containers (700) zu einem Bild und Verarbeiten der visuellen Merkmale des Bilds, um die Protokolldaten aus dem Bild zu erhalten.

5. Verfahren (600) nach Anspruch 4, wobei die Protokolldaten aus den Bilddaten von Logos, Stempelcodes oder Postleitzahlen abgeleitet werden.

6. Verfahren (600) nach einem der vorstehenden Ansprüche, wobei die Übertragungselemente in dem Schritt des Verarbeitens von Protokolldaten Elemente sind, die aus Folgendem ausgewählt sind:
der Identifikation des Senders, Routinginformationen, der Identifikation des Empfängers, Zeitstempeldaten für Übertragungsereignisse, Daten bezüglich Größen, Daten bezüglich Kompression und/oder der Verschlüsselung während der Übertragung und Daten bezüglich eines Containers.

7. Verfahren (600) nach einem der vorstehenden Ansprüche, wobei die Verarbeitungsschritte (620, 660) mittels Anwenden von Regeln durchgeführt werden, die durch Training erhalten werden.

8. Computerprogrammprodukt, das - wenn es in einen Speicher eines Computers geladen und mittels mindestens eines Prozessors des Computers ausgeführt wird - bewirkt, dass der Computer die Schritte des computerimplementierten Verfahrens nach einem der Ansprüche 1 bis 7 durchführt.

9. Computer (200) zum Anwenden von Regeln auf ein computerimplementiertes Ableiten von Daten von Übertragungsprotokollen (740), die der Übertragung der Dokumente von dem Sender (760) an den Empfänger (780) über einen Kanal (770) zugeordnet sind, wobei die Regeln mittels Training erzeugt werden, wobei der Computer (200) angepasst ist, um ein computerimplementiertes Verfahren nach einem der Ansprüche 1 bis 7 durchzuführen.

## Revendications

1. Procédé implémenté par ordinateur (600) exécuté par un ordinateur (200) qui est associé à un destinataire (780) d'un document (100), le procédé (600) permettant d'identifier des attributs (580) du document (100), le procédé (600) comprenant :
la réception (610) du document (100, 103) à partir d'un expéditeur (760) et le traitement (620) du document (100) selon des éléments visuels (110, 120) du document (100) en appliquant des règles (502a, 502b) pour fournir (630) des données de document (500, 503), en dérivant (640) une classe de document (590) ;
la réception (650) de données de protocole (740) qui sont associées à la transmission du document (100, 103) à partir de l'expéditeur (760) vers le destinataire (780), la réception des données de protocole (740-1, 740-2, 740-3) à partir d'un canal (770) qui a transmis le document (100), dans lequel un chemin de transmission est le chemin par l'intermédiaire des noeuds du canal, qui sont identifiés par le traitement des données de protocole de la transmission du document ;
l'obtention de l'identification de noeuds (1, 3, 5, 7) du canal (770) qui par apprentissage ont été identifiés comme appartenant à une transmission dans une classe standard, la classe standard comprenant des chemins de transmission, qui ont été identifiés en tant que voie standard pendant l'apprentissage, chemin standard dans ce qui suit, dans lequel - par apprentissage - le chemin standard a été relié à une classe particulière de document, et dans lequel la classe standard et une classe non standard sont des classes de transmission ;
le traitement (660) des données de protocole (740) selon des éléments de transmission (710, 720) en appliquant des règles de protocole (742) pour obtenir des données de transmission (800, 503), et la dérivation (670) d'une classe de transmission (890), avec une identification d'éléments particuliers de transmission en identifiant des noeuds (1, 2, 3, 4, 5, 6, 7) du canal (770) et en classant le chemin de transmission pour qu'il coïncide avec une classe standard ou avec une classe non standard ; et
la comparaison (680) de la classe de document (590) et de la classe de transmission (890) en appliquant des règles de comparaison (750) pour fournir un attribut de document (580).

2. Procédé (600) selon la revendication 1, dans lequel dans l'étape de comparaison (680), l'attribut de document (580) est fourni en tant que déclaration concernant l'authentification de l'expéditeur (760).

3. Procédé (600) selon l'une quelconque des revendications précédentes, dans lequel l'étape de réception de données de protocole (650) est mise en oeuvre en recevant des données de protocole (740) à partir d'un conteneur (700) par le fait que le document (100) a été transmis par l'intermédiaire du canal (770).

4. Procédé (600) selon l'une quelconque de la revendication 3, dans lequel l'étape de réception de données de protocole (650) est exécutée pour le conteneur (700) qui est une enveloppe, avec une photographie du conteneur (700) en une image, et un traitement des caractéristiques visuelles de l'image pour obtenir les données de protocole à partir de l'image.

5. Procédé (600) selon la revendication 4, dans lequel les données de protocole provenant des données d'image sont dérivées de logos, d'un timbre ou de codes postaux.

6. Procédé (600) selon l'une quelconque des revendications précédentes, dans lequel dans l'étape de traitement de données de protocole, les éléments de transmission sont des éléments choisis parmi ce qui suit :
l'identification de l'expéditeur, des informations de routage, une identification du destinataire, des données d'horodatage pour des événements de transmission, des données concernant des quantités, des données concernant une compression et/ou un chiffrement pendant la transmission, et des données concernant un conteneur.

7. Procédé (600) selon l'une quelconque des revendications précédentes, dans lequel les étapes de traitement (620, 660) sont mises en oeuvre en appliquant des règles obtenues par apprentissage.

8. Produit programme informatique qui - lorsqu'il est chargé dans une mémoire d'un ordinateur et est exécuté par au moins un processeur de l'ordinateur - amène l'ordinateur à mettre en oeuvre les étapes du procédé implémenté par ordinateur selon l'une quelconque des revendications 1 à 7.

9. Ordinateur (200) permettant d'appliquer des règles à des données de dérivation implémentées par ordinateur provenant de protocoles de transmission (740) qui sont associés à la transmission des documents à partir de l'expéditeur (760) vers le destinataire (780) par l'intermédiaire d'un canal (770), dans lequel le règles sont générées par apprentissage, l'ordinateur (200) étant conçu pour mettre en oeuvre un procédé implémenté par ordinateur selon l'une quelconque des revendications 1 à 7.
